# EUROPEAN PATENT SPECIFICATION

(11) **EP 4 170 080 B1**
(45) Date of publication and mention of the grant of the patent: **16.04.2025**
(21) Application number: 21825667.5
(22) Date of filing: 08.06.2021
(51) Int. Cl.: B01D 53/04, B01D 53/06, B01D 53/72, B01D 53/82, B01J 20/20, B01J 20/28, D04H 1/4242, B01D 53/73

(54) **ADSORPTION ROTOR, ADSORPTION TREATMENT DEVICE, AND TREATMENT SYSTEM**
ADSORPTIONSROTOR, ADSORPTIONSBEHANDLUNGSVORRICHTUNG UND BEHANDLUNGSSYSTEM
ROTOR D'ADSORPTION, DISPOSITIF DE TRAITEMENT PAR ADSORPTION ET SYSTÈME DE TRAITEMENT

(30) Priority: 19.06.2020 JP 2020105897; 19.06.2020 JP 2020002403 U; 02.10.2020 JP 2020167496; 02.10.2020 JP 2020004278 U; 09.12.2020 JP 2020204056; 09.12.2020 JP 2020005317 U
(43) Date of publication of application: 26.04.2023
(73) Proprietor: TOYOBO MC Corporation, Osaka 530-0001 (JP)
(72) Inventor: OKADA, Takemasa, Otsu-shi, Shiga 520-0292 (JP); TATEYAMA, Samu, Otsu-shi, Shiga 520-0292 (JP); SUGIURA, Tsutomu, Osaka-shi, Osaka 530-8230 (JP); HAYASHI, Toshiaki, Osaka-shi, Osaka 530-8230 (JP)
(74) Representative: Vossius & Partner Patentanwälte Rechtsanwälte mbB
(86) International application number: PCT/JP2021/021670
(87) International publication number: WO 2021/256324

(56) References cited:
- WO-A1-99/48594
- JP-A- 2010 181 407
- JP-A- 2013 136 865
- JP-A- 2019 209 269
- JP-A- H09 220 431

## Description

### TECHNICAL FIELD

The present disclosure relates to an adsorption element block, an adsorption unit, an adsorption rotor, an adsorption treatment device, and a treatment system.

### BACKGROUND ART

Conventionally, a concentration device for a gas (treatment target gas) containing a treatment target substance at a low concentration at a high flow rate has been known. The conventional concentration device causes the treatment target gas to pass through an adsorption element having a honeycomb structure to adsorb the treatment target substance on the adsorption element and remove this substance. The adsorbed treatment target substance is desorbed from the adsorption element by using a small amount of heating air. The gas containing desorbed treatment target substance at a high concentration at a low flow rate (concentrated gas) is treated by a secondary treatment device, such as a combustion device, thus allowing the total cost of exhaust gas treatment to be reduced.

A hollow cylindrical rotor type (cylinder type) adsorption treatment device that uses an adsorption rotor including constant-shaped adsorption elements arranged on a side surface of a hollow cylindrical cylinder is disclosed in, for example, Japanese Patent Laid-Open No. 63-84616 (PTL 1).

Japanese Patent Laid-Open No. 2019-209269 (PTL 2) discloses an adsorption treatment device further reduced in size by optimizing the number of cells serving as paths for gas and the content of an adsorption material in an adsorption element, in the adsorption element having a honeycomb structure.

Japanese Patent Laid-Open No. 6-126122 (PTL 3) discloses a cylinder type adsorption treatment device that uses an activated-carbon-fiber nonwoven fabric mat as an adsorption element.

Japanese Patent Laid-Open No. 54-145372 (PTL 4) discloses a continuous hazardous gas adsorption/desorption device that uses activated carbon fibers for an adsorption cartridge.

Japanese Patent Laid-Open No. 6-343814 (PTL 5) discloses a device configuration of a rotary adsorption/desorption gas treatment device including an adsorption cassette where a mat-type adsorption body includes a portion oriented in the vertical direction or an inclined direction with respect to a drum end face direction in an attached state of the cassette.

Japanese Patent Laid-Open No. 2001-120939 (PTL 6) discloses a rotary adsorption/desorption type gas treatment device that includes wind intercepting walls for preventing one wind passage chamber of a rotor from simultaneously communicating with a treatment target gas system ventilation port and a desorption gas system ventilation port.

PCT Application WO 99/48594 (PTL 7) discloses a hollow cylindrical adsorption rotor for treating a gas.

### CITATION LIST

### PATENT LITERATURE

PTL 1: Japanese Patent Laid-Open No. 63-84616
PTL 2: Japanese Patent Laid-Open No. 2019-209269
PTL 3: Japanese Patent Laid-Open No. 6-126122
PTL 4: Japanese Patent Laid-Open No. 54-145372
PTL 5: Japanese Patent Laid-Open No. 6-343814
PTL 6: Japanese Patent Laid-Open No. 2001-120939
PTL 7: PCT Application WO 99/48594

### SUMMARY OF INVENTION

### TECHNICAL PROBLEM

The adsorption treatment devices as disclosed in the literatures described above are required to have a high removing performance for treatment target substances.

As a concentrated gas flows at a lower flow rate and has a higher concentration in the concentration device, a combustion device of a secondary treatment device can be reduced in size, and the operation energy of the combustion device can also be reduced. Accordingly, further improvement in concentration is required.

In a case where the adsorption element having the honeycomb structure used in the conventional adsorption rotor is improved and increase in concentration is discussed, the adsorption capacity per adsorption element capacity is required to be increased. Measures for achieving this include, for example, increase in the ratio of the adsorption material contained in the adsorption element, or reduction in sizes of cells. However, according to PTL 2, the adsorption material contained in the adsorption element achieves a high ratio ranging from 65 to 85 wt%. Even if the ratio is further improved, there is a concern that the advantageous effects of increase in concentration is low and the mechanical strength of the adsorption element is reduced. If the honeycomb structure has reduced cells, the pressure loss of the adsorption element becomes high, and an enormous energy is required to ventilate the adsorption rotor with a treatment target gas or a heating air.

Incidentally, activated-carbon-fiber nonwoven fabric is known to have a larger adsorption capacity than other adsorption elements, and a high adsorption/desorption rate. Accordingly, an adsorption treatment device using activated-carbon-fiber nonwoven fabric as disclosed in PTL 3 as an adsorption element is expected to be capable of achieving high concentration in comparison with a case of adopting a honeycomb structure as an adsorption element. However, typical activated-carbon-fiber nonwoven fabric has a significantly high pressure loss. Accordingly, in a case of application to a concentration device that treats a treatment target gas at a high flow rate, it is required to reduce the thickness of the activated-carbon-fiber nonwoven fabric. As a result, it is concerned that the adsorption efficiency for the treatment target substance is reduced.

The activated-carbon fibers have a significantly low tensile strength and fracture elongation of a single yarn in comparison with typical fibers. Accordingly, the fibers are damaged by repetition of presence and absence of ventilation to the activated-carbon-fiber nonwoven fabric or repetition of alternate ventilation in countercurrent directions, the thickness of the activated-carbon-fiber nonwoven fabric is reduced over time, and the original shape cannot be maintained, in some cases. As a result, a short pass of the treatment target gas could be caused in the adsorption rotor, and the adsorption efficiency for the treatment target gas could be reduced prematurely.

The adsorption treatment device disclosed in the patent literature is provided with partition parts between the adsorption elements. The partition parts are members that include no air flow path, and are for fixing the adsorption elements to the hollow cylindrical cylinder, and for preventing the treatment target gas from leaking. The volume occupied by partition parts in the adsorption treatment device serves as a dead space that does not directly contribute to treatment of the treatment target gas. The required space increases accordingly, which increases the size of the device

An object of the present disclosure is to provide an adsorption element block, an adsorption unit, an adsorption rotor, an adsorption treatment device, and a treatment system that achieve improvement in removing performance for the treatment target substance, improvement in concentration, long stability of removing performance for the treatment target substance, and reduction in size.

### SOLUTION TO PROBLEM

The invention is defined in the claims. A first aspect of the invention relates to a hollow cylindrical adsorption rotor rotating about a cylinder axis. A second aspect of the invention relates to an adsorption treatment device comprising the adsorption rotor. A third aspect of the invention relates to a treatment system comprising the adsorption treatment device. According to an aspect of an adsorption element block of the present disclosure, the adsorption element block includes: a housing that has an introduction opening and a discharge opening; and an adsorption element which is loaded in the housing, and allows gas to pass through this adsorption element, wherein the housing allows all the gas introduced from the introduction opening to pass through the adsorption element and subsequently be discharged through the discharge opening, the adsorption element includes an activated-carbon-fiber nonwoven fabric, and the activated-carbon-fiber nonwoven fabric has a total weight per unit area of 600 to 6,000 g/m², a toluene adsorption rate of 25 to 75 wt%, and a fiber diameter of 15 to 120 µm.

In the adsorption element block, the adsorption element is arranged so as to allow the gas to flow in an intersecting manner.

In the adsorption element block, the activated-carbon-fiber nonwoven fabric has a bulk density of 50 to 200 kg/m³, a compressibility of 30% or less, and a compressive elastic modulus of 80% or more.

In the adsorption element block, a precursor of the activated-carbon-fiber nonwoven fabric is mainly made of at least one or more fibers of phenol resin fibers, cellulose fibers, and polyphenylene ether fibers.

In the adsorption element block, a plurality of the adsorption elements are arranged to be stacked in the housing.

In the adsorption element block, the single adsorption element is folded and is arranged to be stacked in the housing.

In the adsorption element block, the introduction opening and the discharge opening are each blocked with a plurality of partition members, the plurality of partition members on a side of the introduction opening, and the plurality of partition members on a side of the discharge opening are arranged at positions displaced from each other in a vertical direction, and the gas having passed through gaps between the plurality of partition members on the side of the introduction opening passes through the adsorption element and is subsequently discharged through gaps between the plurality of partition members on the side of the discharge opening.

In the adsorption element block, the adsorption element is supported by the plurality of partition members.

In the adsorption element block, the adsorption element block has a pressure loss of 1,000 Pa or less, and a thickness of 500 mm or less in a flow direction of the gas.

In the adsorption element block, an amount of toluene adsorption [kg] of the adsorption element block per inner capacity [m³] is 12 to 70 kg/m³.

According to the adsorption rotor of the present invention, the hollow cylindrical adsorption rotor rotating about a cylinder axis includes: a plurality of adsorption element blocks loaded with adsorption elements through which gas can pass; and a plurality of partition parts through which no gas can pass, wherein the adsorption element blocks and the partition parts are arranged alternately in a circumferential direction about the cylinder axis, and each of the adsorption element blocks is the adsorption element block according to any of those described above.

According to the adsorption treatment device of the present invention, the adsorption treatment device includes: the adsorption rotor described above; and a flow path formation member that forms a flow path for the gas to flow through the adsorption element blocks provided for the adsorption rotor.

In the adsorption treatment device, the flow path formation member forms the flow path for the gas so as to allow a heating gas to pass in a radial direction about the cylinder axis through the adsorption element blocks positioned at set rotation phases in rotation of the adsorption rotor, the heating gas being for desorbing an organic solvent from a treatment target gas containing the organic solvent or the adsorption element.

According to an aspect of a treatment system of the present disclosure, the treatment system, includes: the adsorption treatment device described above; and a pretreatment device that treats a treatment target fluid before introduction into the adsorption treatment device, and/or an aftertreatment device that treats a desorption gas discharged from the adsorption treatment device.

According to an aspect of an adsorption unit of the present disclosure, the adsorption unit includes: a housing that has an introduction opening and a discharge opening; and an adsorption element that is arranged in the housing, and adsorbs a substance to be adsorbed contained in a treatment target gas, wherein the housing has the introduction opening through which the treatment target gas flows in, and the discharge opening through which the treatment target gas cleaned by the adsorption element flows out, a plurality of the adsorption elements are arranged to be stacked, the adsorption elements including an activated-carbon-fiber nonwoven fabric, and the treatment target gas having flowed in through the introduction opening passes through the adsorption element and is discharged through the discharge opening.

In the adsorption unit, the adsorption elements are arranged to be stacked in a direction intersecting with a flow direction of the treatment target gas.

In the adsorption unit, the adsorption elements are arranged to be stacked in a flow direction of the treatment target gas.

In the adsorption unit, the adsorption elements are arranged so as to allow the treatment target gas to flow in an intersecting manner.

In the adsorption unit, the single adsorption element is folded and is arranged to be stacked in the housing.

In the adsorption unit, the introduction opening and the discharge opening are each blocked with a plurality of partition members, the plurality of partition members on a side of the introduction opening, and the plurality of partition members on a side of the discharge opening are arranged at positions displaced from each other in a vertical direction, and the treatment target gas having passed through gaps between the plurality of partition members on the side of the introduction opening passes through the adsorption element and is subsequently discharged through gaps between the plurality of partition members on the side of the discharge opening.

In the adsorption unit, the adsorption element is supported by the plurality of partition members.

According to an aspect of an adsorption rotor of the present disclosure, the hollow cylindrical adsorption rotor rotating about a cylinder axis, the adsorption rotor includes: a plurality of adsorption units loaded with adsorption elements through which gas can pass; and a plurality of partition parts through which no gas can pass, wherein the adsorption units and the partition parts are arranged alternately in a circumferential direction about the cylinder axis, and each of the adsorption units is the adsorption unit according to any of those described above.

According to an aspect of an adsorption treatment device of the present disclosure, the adsorption treatment device includes: the adsorption rotor described above; and a flow path formation member that forms a flow path for the treatment target gas passing through the adsorption units provided for the adsorption rotor.

In the adsorption treatment device, the flow path formation member forms the flow path for the gas so as to allow a heating gas to pass in a radial direction about the cylinder axis through the adsorption units positioned at set rotation phases in rotation of the adsorption rotor, the heating gas being for desorbing an organic solvent from a treatment target gas or the adsorption element that contains the organic solvent.

According to the treatment system of the present invention, the treatment system includes: the adsorption treatment device described above; and a pretreatment device that is arranged on an upstream side of the adsorption treatment device in view with respect to a flow of the treatment target gas and preliminarily treats the treatment target gas, and/or an aftertreatment device that is arranged on a downstream side of the adsorption treatment device and treats the treatment target gas discharged from the adsorption treatment device.

### ADVANTAGEOUS EFFECTS OF INVENTION

The present disclosure can provide an adsorption element block, an adsorption unit, an adsorption rotor, an adsorption treatment device, and a treatment system that achieve improvement in removing performance for the treatment target substance, improvement in concentration, long stability of removing performance for the treatment target substance, and reduction in size.

### BRIEF DESCRIPTION OF DRAWINGS

Fig. 1 is a longitudinal sectional view of an adsorption treatment device based on Embodiment 1.
Fig. 2 is a sectional view of the adsorption treatment device taken along line II-II shown in Fig. 1.
Fig. 3 is an enlarged sectional view of a main part of an adsorption rotor shown in Fig. 2.
Fig. 4 is an entire perspective view of an adsorption element block in Embodiment 1.
Fig. 5 is a sectional view taken in an arrow direction of line V-V in Fig. 4.
Fig. 6 is an entire perspective view of an adsorption element block in Embodiment 2.
Fig. 7 is a sectional view taken in an arrow direction of line VII-VII in Fig. 6.
Fig. 8 is an entire perspective view of a first supporter used for the adsorption element block in Embodiment 2.
Fig. 9 is an entire perspective view of a second supporter used for the adsorption element block in Embodiment 2.
Fig. 10 is a developed view of activated-carbon-fiber nonwoven fabric used for the adsorption element block in Embodiment 2.
Fig. 11 is an entire perspective view of an adsorption element block in Embodiment 3.
Fig. 12 is a sectional view taken in an arrow direction of line XII-XII in Fig. 11.
Fig. 13 is an entire perspective view of a supporter used for the adsorption element block in Embodiment 3.
Fig. 14 is an entire perspective view of an adsorption unit in Embodiment 4.
Fig. 15 is part of a sectional view taken in an arrow direction of line XV-XV in Fig. 14.
Fig. 16 is an entire perspective view of an adsorption unit in Embodiment 5.
Fig. 17 is part of a sectional view taken in an arrow direction of line XVII-XVII in Fig. 16.
Fig. 18 is an entire perspective view of a first supporter used for the adsorption unit in Embodiment 5.
Fig. 19 is an entire perspective view of a second supporter used for the adsorption unit in Embodiment 5.
Fig. 20 is an entire perspective view of an adsorption unit in Embodiment 6.
Fig. 21 is part of a sectional view taken in an arrow direction of line XXI-XXI in Fig. 20.
Fig. 22 is an entire perspective view of a supporter used for the adsorption unit in Embodiment 6.
Fig. 23 is an entire perspective view of an adsorption unit in Embodiment 7.
Fig. 24 is a sectional view taken in an arrow direction of line XXIV-XXIV in Fig. 23.
Fig. 25 is an entire perspective view of the adsorption unit in a state with a housing being taken out.
Fig. 26 is a perspective view showing a first partition member.
Fig. 27 is a perspective view showing a second partition member.
Fig. 28 is an entire perspective view of an adsorption unit in Embodiment 8.
Fig. 29 shows a cross-sectional structure of a sealing member provided for the adsorption unit in Embodiment 8.
Fig. 30 shows another cross-sectional structure of the sealing member provided for the adsorption unit in Embodiment 8.
Fig. 31 shows another cross-sectional structure of the sealing member provided for the adsorption unit in Embodiment 8.
Fig. 32 is an entire perspective view of an adsorption unit in Embodiment 9.
Fig. 33 shows a cross-sectional structure of an annular groove and a sealing member provided for the adsorption unit in Embodiment 9.
Fig. 34 shows a cross-sectional structure of another annular groove and sealing member provided for the adsorption unit in Embodiment 9.
Fig. 35 shows a cross-sectional structure of another annular groove and sealing member provided for the adsorption unit in Embodiment 9.
Fig. 36 shows a cross-sectional structure of another annular groove and sealing member provided for the adsorption unit in Embodiment 9.
Fig. 37 is an entire perspective view of an adsorption unit in Embodiment 10.
Fig. 38 is an entire perspective view of an adsorption unit in Embodiment 11.
Fig. 39 is part of a sectional view taken in an arrow direction of line XXXIX-XXXIX in Fig. 38.
Fig. 40 is an entire perspective view of an adsorption unit in Embodiment 12.
Fig. 41 is a sectional view taken in an arrow direction of line XLI-XLI in Fig. 40.
Fig. 42 is an entire perspective view of an adsorption unit in Embodiment 13.

### DESCRIPTION OF EMBODIMENTS

An adsorption element block, an adsorption unit, an adsorption rotor, an adsorption treatment device, and a treatment system in embodiments based on the present disclosure are hereinafter described with reference to the drawings. In the embodiments described below, in cases of reference to the numbers and amounts of items, the scope of the present invention is not limited to the numbers and amounts unless otherwise described. The same components or corresponding components are assigned the same reference numbers, and the redundant description is not repeated in some cases. It is preliminarily assumed that components in the embodiments are appropriately combined and used.

### [Embodiment 1: Adsorption treatment device 100]

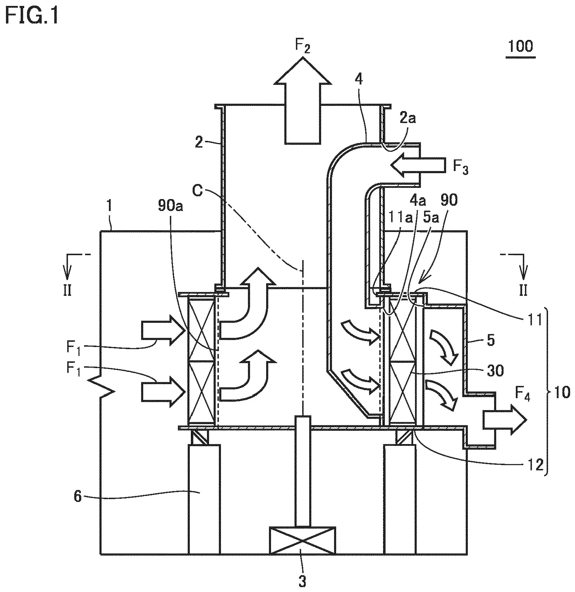

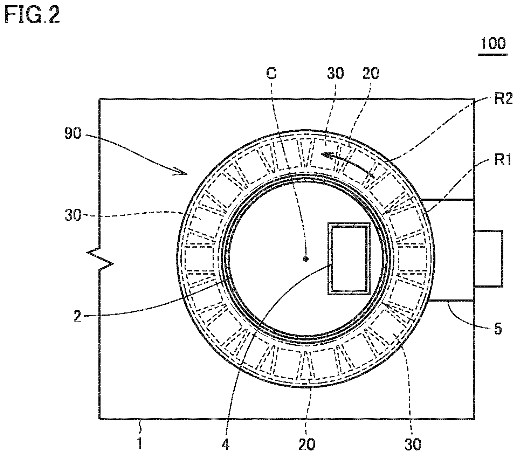

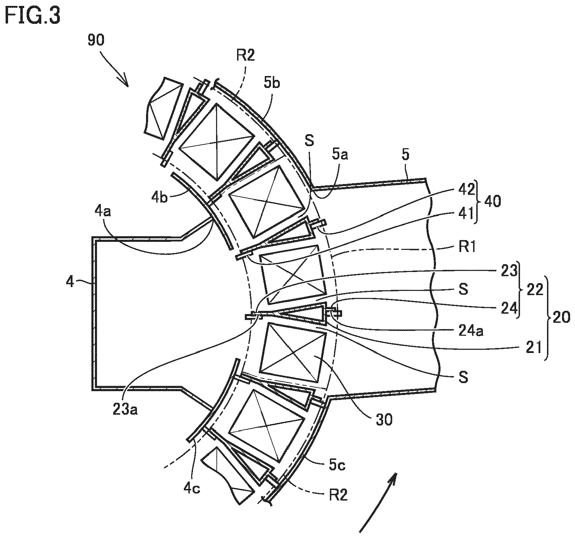

Fig. 1 is a longitudinal sectional view of an adsorption treatment device 100 based on the present embodiment. Fig. 2 is a sectional view of adsorption treatment device 100 taken along line II-II shown in Fig. 1. Fig. 3 is an enlarged sectional view of a main part of an adsorption rotor 90 shown in Fig. 2.

As shown in Figs 1 to 3, adsorption treatment device 100 includes adsorption rotor 90. Adsorption rotor 90 is installed in a treatment chamber 1. Adsorption rotor 90 is provided so as to allow a fluid to flow in the radial direction. Adsorption rotor 90 is provided so as to be rotatable about a cylinder axis C by receiving a rotary drive force of a motor 3. Adsorption rotor 90 is supported rotatably on a plurality of support members 6, such as support columns, so that cylinder axis C direction is oriented in the vertical direction. Alternatively, an example where cylinder axis C direction is oriented in the horizontal direction may be adopted. Curved arrows shown in Figs. 2 and 3 indicate the rotational direction of adsorption rotor 90.

Adsorption rotor 90 includes a pair of hollow disks 10, a plurality of partition parts 20, and a plurality of adsorption element blocks 30.

The pair of hollow disks 10 include a first hollow disk 11 and a second hollow disk 12. First hollow disk 11 and second hollow disk 12 have circular ring plate shapes, and are arranged so that each of the centers is on cylinder axis C. At a center portion of first hollow disk 11, an opening part 11a is formed. First hollow disk 11 and second hollow disk 12 are arranged in parallel, with a distance being secured, so that partition parts 20 and adsorption element blocks 30 can be arranged between these disks.

Adsorption rotor 90 is cylindrically formed by alternately arranging partition parts 20 and adsorption element blocks 30 in a circumferential direction about cylinder axis C between the pair of hollow disks 10. Adsorption rotor 90 has a hollow cylindrical shape as a whole, and a cylinder hole 90a (central space part) is formed. Cylinder hole 90a communicates with opening part 11a of first hollow disk 11.

The plurality of partition parts 20 partition the space between the pair of hollow disks 10 into a plurality of spaces S (see Fig. 3) independent of each other in the circumferential direction about cylinder axis C. Partition parts 20 are members which include no air flow path and through which air cannot pass. Partition parts 20 are attached between the pair of hollow disks 10 so as to be airtight and/or liquid-tight manner.

Each of partition parts 20 includes a main body part 21 and a sealing part 22. Main body part 21 is formed of stainless steel, iron or the like, and constitutes a framework part of partition parts 20. Main body part 21 has a triangular cylindrical shape. Main body part 21 includes a top edge part positioned on the inner circumferential side of adsorption rotor 90, and a bottom surface part of main body part 21 positioned on the outer circumferential side of adsorption rotor 90. The plurality of partition parts 20 are arranged so that the barycenters of the triangles in plan view of main body part 21 are arranged at regular intervals in the circumferential direction about cylinder axis C.

Sealing part 22 is provided around main body part 21. Sealing part 22 may be formed integrally with main body part 21, or formed as a member separated from main body part 21. In a case where sealing part 22 is formed as a member separated from main body part 21, sealing part 22 may be joined to main body part 21 by adhesion or the like, or be configured so as to be attachable or detachable to and from main body part 21.

Sealing part 22 in the present embodiment includes an inner-circumferential-side sealing part 23, and an outer-circumferential-side sealing part 24. Inner-circumferential-side sealing part 23 is positioned on an inner side (a side closer to cylinder axis C) with respect to main body part 21 in the radial direction of adsorption rotor 90. Outer-circumferential-side sealing part 24 is positioned on an outer side (a side apart from cylinder axis C) with respect to main body part 21 in the radial direction of adsorption rotor 90. Inner-circumferential-side sealing part 23 is provided so as to protrude from the top edge part of main body part 21 toward the inner side of adsorption rotor 90 in the radial direction. Outer-circumferential-side sealing part 24 is provided so as to protrude from the bottom surface part of main body part 21 outward of adsorption rotor 90 in the radial direction.

Inner-circumferential-side sealing part 23 and outer-circumferential-side sealing part 24 in the present embodiment each have a rib-like shape that extends in the axial direction (the direction in which cylinder axis C extends), and extends in the radial direction of adsorption rotor 90. Inner-circumferential-side sealing part 23 has a sealing surface 23a. Outer-circumferential-side sealing part 24 has a sealing surface 24a. Sealing surfaces 23a and 24a intersect with the rotation direction of adsorption rotor 90.

Inner-circumferential-side sealing part 23 and outer-circumferential-side sealing part 24 are provided with sealing members 40. Sealing member 40 is formed of, for example, an elastic rubber material, and has airtightness and/or a liquid-tightness. Sealing member 40 may have a function of partitioning an adsorption region where an adsorption treatment of adsorbing the treatment target gas on adsorption element block 30 is performed, from a desorption region where a desorption treatment of desorbing the treatment target gas from adsorption element block 30 is performed, and/or a function of preventing the treatment target gas from leaking from adsorption treatment device 100 and treatment chamber 1.

Sealing member 40 includes an inner-side sealing member 41 positioned on the inner circumferential side of adsorption rotor 90, and an outer-side sealing member 42 positioned on the outer side of adsorption rotor 90. Inner-side sealing member 41 is installed on sealing surface 23a of inner-circumferential-side sealing part 23. Inner-side sealing member 41 protrudes from partition parts 20 toward the inner side of adsorption rotor 90 in the radial direction. Outer-side sealing member 42 is installed on sealing surface 24a of outer-circumferential-side sealing part 24. Outer-side sealing member 42 protrudes from partition parts 20 toward the outer side of adsorption rotor 90 in the radial direction. Inner-side sealing member 41 and outer-side sealing member 42 extends from one hollow disk (first hollow disk 11) to the other hollow disk (second hollow disk 12) between the pair of hollow disks 10.

Adsorption element block 30 is a member loaded with an adsorption element allowing gas, such as a treatment target gas, to pass in an intersecting manner. Adsorption element block 30 allows the gas to pass from the outer circumferential surface of adsorption rotor 90 toward cylinder hole 90a. Each adsorption element block 30 is accommodated in any of spaces S independent of each other. A plurality of adsorption element blocks 130 are arranged at intervals in the circumferential direction of adsorption rotor 90. Partition part 20 is arranged between two adsorption element blocks 130 adjacent to each other in the circumferential direction of adsorption rotor 90.

Each adsorption element block 30 has an external shape that is a rectangular parallelepiped. Adsorption element block 30 has four first sides extending in the axial direction of adsorption rotor 90, four second sides extending in the radial direction of adsorption rotor 90, and four third sides extending orthogonal to the first sides and the second sides. As for adsorption element block 30, the first sides are significantly larger than the second sides and the third sides. Adsorption element block 30 has a rectangular parallelepiped shape with the first sides being adopted as long sides. The sectional shape of adsorption element blocks 30 orthogonal to cylinder axis C is a square or a rectangle.

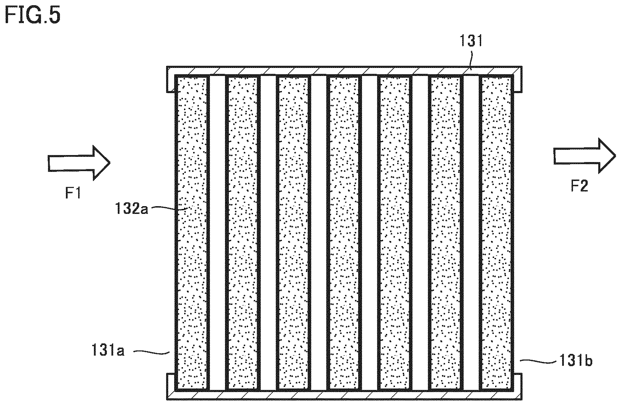

For example, adsorption element block 130 shown in Fig. 5 is adopted as adsorption element block 30. Adsorption element block 130 is loaded with one or more layers of activated-carbon-fiber nonwoven fabric 132a being stacked as an adsorption element. The treatment target gas passes through the inside of activated-carbon-fiber nonwoven fabric 132a, thereby improving the efficiency of collision with the treatment target substance and improving the adsorption efficiency. On the other hand, also in a case of supplying heating air to desorb the adsorbed treatment target substance, the contact efficiency between activated-carbon-fiber nonwoven fabric 132a and the heating air is improved, and the thermal energy is efficiently transmitted to activated-carbon-fiber nonwoven fabric 132a. Accordingly, the flow rate of the heating air can be reduced. That is, by adopting activated-carbon-fiber nonwoven fabric 132a as the adsorption element, a high removing performance can be exerted, and further improvement in concentration can be achieved.

The total weight per unit area of activated-carbon-fiber nonwoven fabric 132a is 600 g/m² or more, and 6,000 g/m² or less. If the total weight per unit area is less than 600 g/m², the efficiency of collision with the treatment target substance is degraded, and the adsorption performance for adsorption element block 130 is inferior. If the total weight per unit exceeds 6,000 g/m², the pressure loss increases, which prevents sufficient ventilation with the gas. In consideration of the balance between the adsorption performance and the pressure loss, it is more preferable that the total weight per unit area be 1,200 g/m² or more and 4,000 g/m² or less.

The toluene adsorption rate of activated-carbon-fiber nonwoven fabric 132a is 25 wt% or more and 75 wt% or less. If the toluene adsorption rate is 25 wt% or less, the adsorption performance is lower than that of the adsorption element according to the conventional art. Since the activated-carbon-fiber having a high toluene adsorption rate has a large total pore volume, the bulk density of the fiber becomes low. Accordingly, if the toluene adsorption rate exceeds 75 wt%, the tensile strength of a single yarn decreases, the tensile strength and the compressive elastic modulus of the activated-carbon-fiber nonwoven fabric decrease, and the shape stability for the adsorption element decreases. In consideration of the balance between the adsorption performance and the shape stability, it is preferable that the toluene adsorption rate be 30 wt% or more and 70 wt% or less.

The fiber diameter of each of activated-carbon-fibers constituting activated-carbon-fiber nonwoven fabric 132a is 15 µm or more and 120 µm or less. If the fiber diameter is less than 15 µm, the pressure loss increases, which prevents sufficient ventilation with the gas. If the fiber diameter exceeds 120 µm, the efficiency of collision with the treatment target substance decreases, the adsorption efficiency decreases, and the adsorption performance for adsorption element block 130 is inferior. Since the contact efficiency with the heating air decreases and the thermal energy becomes less likely to be transmitted to activated-carbon-fiber nonwoven fabric 132a, the flow rate of the heating air becomes high. Furthermore, the flexibility of activated-carbon-fiber nonwoven fabric 132a decreases, and fabrication to adsorption element blocks 130 becomes difficult. In consideration of the balance between the pressure loss, the adsorption performance, the heating air flow rate, and the workability to adsorption element blocks 130, it is preferable that the fiber diameter be 15 µm or more and 120 µm or less.

Preferably, the pressure loss of adsorption element blocks 130 is 1,000 Pa or less; 800 Pa is more preferable. If the pressure loss is 1,000 Pa or more, sufficient ventilation with the gas cannot be achieved. Typically, the lower limit value of the pressure loss is 50 Pa or more.

Preferably, the thickness of adsorption element blocks 130 is 500 mm or less; 300 mm or less is more preferable. Adsorption element blocks 130 have a block shape of a rectangular parallelepiped. Accordingly, the size of the adsorption rotor where adsorption element blocks 130 are arranged to have a hollow cylindrical shape is limited by the sizes of the blocks of adsorption element blocks 130. In particular, the size is largely limited by the thicknesses of adsorption element blocks 130 in the ventilation direction of the gas. By reducing the thicknesses of adsorption element blocks 130, the adsorption rotor can be more reduced in size.

Preferably, the bulk density of activated-carbon-fiber nonwoven fabric 132a is 50 kg/m³ or more and 200 kg/m³ or less. If the bulk density is less than 50 kg/m³, the compressibility of the nonwoven fabric becomes high, and is prone to being wrinkled due to fabrication to adsorption element blocks 130. Accordingly, fabrication becomes difficult. If the bulk density exceeds 200 kg/m³, the pressure loss of the nonwoven fabric increases, which prevents sufficient ventilation with the gas. In consideration of the balance between the workability to adsorption element blocks 130 and the pressure loss, it is preferable that the bulk density be 60 kg/m³ or more and 150 kg/m³ or less.

Preferably, the compressibility of activated-carbon-fiber nonwoven fabric 132a is 30% or less; 25% or less is more preferable. If the compressibility exceeds 30%, the fabric becomes prone to being wrinkled in fabrication to adsorption element blocks 130. Accordingly, fabrication becomes difficult. Typically, the lower limit value of the compressibility is 5% or more.

Preferably, the compressive elastic modulus of activated-carbon-fiber nonwoven fabric 132a is 80% or more; 85% or more is more preferable. If the compressive elastic modulus is less than 80%, repetition of presence and absence of ventilation to adsorption element blocks 130, or repetition of alternate ventilation in countercurrent directions causes the activated-carbon-fiber nonwoven fabric to displace over time, which causes a short pass of the gas in the adsorption rotor, thus reducing the adsorption efficiency to the treatment target substance prematurely. Typically, the upper limit value of the compressive elastic modulus is 99% or less.

Adsorption element blocks 130 in the embodiment is manufactured by the following method. A method of manufacturing precursor nonwoven fabric of activated-carbon-fiber nonwoven fabric 132a is not specifically limited. A publicly known method may be appropriately adopted. Methods of manufacturing nonwoven fabric include the spunbonding method, the melt blown method, the spun lace method, the needlepunched method, the thermal bond method, and the chemical bond method. Among them, the needlepunched method is preferable.

Activated-carbon-fiber nonwoven fabric 132a can be manufactured by carbonizing the precursor nonwoven fabric by a publicly known method and subsequently activating the fabric. Specifically, the gas activation method and the chemical activation method may be adopted. However, in view of improvement in fiber strength and purity, the gas activation method is preferable.

Alternatively, what is obtained by fabricating activated-carbon-fibers to have a sheet shape by the wet papermaking method using a binder can be manufactured as activated-carbon-fiber nonwoven fabric 132a.

The precursor fibers of the activated-carbon-fibers include phenol resin, cellulose fibers, polyphenylene ether fibers, polyacrylonitrile, pitch, lignin, and bamboo. However, in view of improvement in fiber strength, compressive elastic modulus and purity, phenol resin, cellulose fibers, polyphenylene ether fibers are preferable.

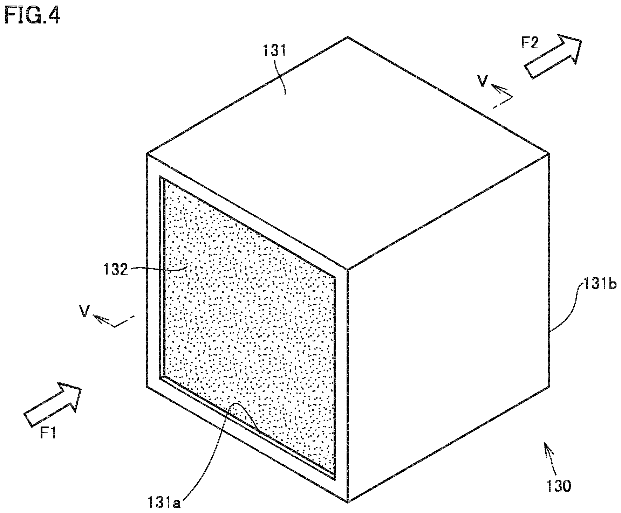

Referring to Figs. 4 and 5, the specific configuration of adsorption element block 130 in the present embodiment is described. Fig. 4 is an entire perspective view of adsorption element block 130. Fig. 5 is a sectional view taken in an arrow direction of line V-V in Fig. 4.

Adsorption element block 130 includes a rectangular housing 131. Housing 131 is only required to have a sufficient strength, heat resistance, chemical resistance and the like in a use condition. Preferably, a metal material, such as iron, stainless steel or aluminum, or a resin material, such as acrylic, Bakelite or melanine, is used.

Housing 131 has an introduction opening 131a through which a treatment target fluid F1 flows in, and a discharge opening 131b through which a treatment target fluid F2 cleaned by adsorption element block 130 flows out. The total amount of treatment target fluid F1 having flowed in through introduction opening 131a passes through the adsorption element provided in adsorption element block 130, and flows out through discharge opening 131b.

Adsorption elements 132 are made of plate-shaped activated-carbon-fiber nonwoven fabric. A plurality layers of adsorption elements 132 are stacked and arranged along the direction of treatment target fluid F1. Adsorption elements 132 are loaded in rectangular parallelepiped housing 131 so as to be orthogonal to the ventilation direction.

Preferably, adsorption element block 130 in the embodiment has an amount of toluene adsorption per inner capacity of 12 to 70 kg/m³. If the amount of toluene adsorption per inner capacity becomes less than 12 kg/m³, the number of blocks increases, which increases the size of the adsorption rotor. If the amount of toluene adsorption per inner capacity exceeds a value than 70 kg/m³, the pressure loss increases because the amount of loaded activated-carbon-fibers increases, which prevents sufficient ventilation of the gas. In consideration of the balance between the size reduction of adsorption rotor and the pressure loss, it is preferable that the toluene adsorption per inner capacity be 14 kg/m³ or more, and 50 kg/m³ or less.

Referring again to Figs. 1 to 3, adsorption treatment device 100 further includes a first flow path formation member 2, an inner circumferential side flow path formation member 4, and an outer circumferential side flow path formation member 5.

One end of first flow path formation member 2 is configured to maintain the inside of first flow path formation member 2 and cylinder hole 90a of adsorption rotor 90 airtight, and allow adsorption rotor 90 to rotate about cylinder axis C. An annular sealing member may be clamped by the one end of first flow path formation member 2 and first hollow disk 11 at a portion positioned at the periphery of opening part 11a. The other end of first flow path formation member 2 is drawn outside of treatment chamber 1.

Inner circumferential side flow path formation member 4 is provided on cylinder hole 90a on an inner circumferential side of adsorption rotor 90. Outer circumferential side flow path formation member 5 is provided on the outer circumferential side of adsorption rotor 90. Inner circumferential side flow path formation member 4 and outer circumferential side flow path formation member 5 are provided so as to clamp part of adsorption rotor 90 in the circumferential direction and be opposite to each other on the inner circumferential side and the outer circumferential side of adsorption rotor 90.

Inner circumferential side flow path formation member 4 is provided so as to extend along cylinder hole 90a, and extend from opening part 11a toward the outside of adsorption rotor 90. Inner circumferential side flow path formation member 4 includes a portion extending through opening part 11a of first hollow disk 11 in a cylinder axis C direction.

An inner circumferential side opening end part 4a that faces the inner circumferential surface of adsorption rotor 90 is provided at the one end of inner circumferential side flow path formation member 4. The opening surface at inner circumferential side opening end part 4a is provided to face part of a region of the inner circumferential surface of adsorption rotor 90. The other end of inner circumferential side flow path formation member 4 protrudes to the outside of first flow path formation member 2 from an opening part 2a provided for first flow path formation member 2.

An inner circumferential side curved surface 4b is provided at an edge part of inner circumferential side opening end part 4a positioned on the downstream side of adsorption rotor 90 in the rotational direction. An inner circumferential side curved surface 4c is provided at an edge part of inner circumferential side opening end part 4a positioned on the upstream side of adsorption rotor 90 in the rotational direction. Inner circumferential side curved surfaces 4b and 4c are curved along the rotational direction of adsorption rotor 90.

An outer circumferential side opening end part 5a that faces the outer circumferential side of adsorption rotor 90 is provided at the one end of outer circumferential side flow path formation member 5. Outer circumferential side opening end part 5a is provided to face part of a region of the outer circumferential surface of adsorption rotor 90. The other end of outer circumferential side flow path formation member 5 protrudes to the outside of treatment chamber 1.

An outer circumferential side curved surface 5b is provided at an edge part of outer circumferential side opening end part 5a positioned on the downstream side of adsorption rotor 90 in the rotational direction. An outer circumferential side curved surface 5c is provided at an edge part of outer circumferential side opening end part 5a positioned on the upstream side of adsorption rotor 90 in the rotational direction. Outer circumferential side curved surfaces 5b and 5c are curved along the rotational direction.

As shown in Figs. 2 and 3, adsorption rotor 90 includes a desorption regions R1 and an adsorption regions R2 that are partitioned in the circumferential direction. Adsorption rotor 90 rotates about cylinder axis C, which moves the plurality of adsorption element blocks 30 alternately between desorption regions R1 and adsorption regions R2.

As shown in Fig. 3, the plurality of spaces S rotating accompanied by rotation of adsorption rotor 90 communicate with inner circumferential side flow path formation member 4 and outer circumferential side flow path formation member 5 in desorption regions R1. Accompanied by rotation of adsorption rotor 90, inner-side sealing member 41 is slid with inner circumferential side curved surfaces 4b and 4c, and outer-side sealing member 42 is slid with outer circumferential side curved surfaces 5b and 5c, thereby allowing some spaces S among spaces S to communicate airtightly with inner circumferential side flow path formation member 4 and outer circumferential side flow path formation member 5.

Specifically, spaces S positioned between partition parts 20 positioned between inner circumferential side curved surface 4b and outer circumferential side curved surface 5b, and partition parts 20 positioned between inner circumferential side curved surface 4c and outer circumferential side curved surface 5c communicate airtightly with inner circumferential side flow path formation member 4 and outer circumferential side flow path formation member 5.

Adsorption regions R2 do not communicate with inner circumferential side flow path formation member 4 and outer circumferential side flow path formation member 5, thus constituting a flow path different from desorption regions R1.

As shown in Fig. 1, the fluid is introduced into desorption regions R1 and adsorption regions R2. The fluid is introduced into adsorption regions R2 from the outer side toward the inner side of adsorption rotor 90 in the radial direction. The fluid having passed through adsorption regions R2 passes through cylinder hole 90a of adsorption rotor 90, and flows from opening part 11a of first hollow disk 11 to the outside of adsorption rotor 90. The fluid having passed through the inside of inner circumferential side flow path formation member 4 residing through one opening part 11a of the pair of hollow disks 10 is introduced into desorption regions R1 from the inner side toward the outer side of adsorption rotor 90 in the radial direction.

The fluid introduced into adsorption regions R2 is a treatment target fluid, such as exhaust gas. The treatment target fluid contains an organic solvent as a treatment target substance. In adsorption regions R2, the treatment target fluid is cleaned.

The organic solvent contained in the treatment target substance in the embodiment may include, for example, aldehydes, such as formaldehyde, acetaldehyde, propionaldehyde and acrolein, ketones, such as methyl ethyl ketone, diacetyl, methyl isobutyl ketone, acetone and cyclohexanone, esters, such as 1,4-dioxane, 2-methyl-1,3-dioxolane, 1,3-dioxolane, tetrahydrofuran, methyl acetate, ethyl acetate, propyl acetate, butyl acetate, ethyl butyrate and butyl butyrate, alcohols, such as ethanol, n-propyl alcohol, isopropyl alcohol and butanol, glycols, such as ethylene glycol, propylene glycol, diethylene glycol and triethylene glycol, organic acids, such as acetic acid and propionic acid, aromatic organic compounds, such as phenols, toluene, xylene, benzene, ethylbenzene and mesitylene, cycloalkanes, such as cyclohexane, methylcyclohexane, cyclopentane and cycloheptane, ethers, such as diethyl ether and allyl glycidyl ether, glycol ethers, such as propylene glycol monomethyl ether, propylene glycol monoethyl ether, propylene glycol monomethyl ether acetate and propylene glycol monoethyl ether acetate, nitriles, such as acrylonitrile, chlorinated organic compounds, such as dichloromethane, 1,2-dichloroethane, trichloroethylene, epichlorohydrin and 2-chloromethyl-1,3-dioxolane, and organic compounds, such as N-methyl-2-pyrrolidone, dimethylacetamide and N,N-dimethylformamide.

As shown in Fig. 1, for cleaning, treatment target fluid F1 supplied in treatment chamber 1 is introduced into adsorption regions R2 from the outer circumferential surface of adsorption rotor 90. Treatment target fluid F1 introduced into adsorption regions R2 is cleaned by adsorbing the organic solvent on the plurality of adsorption element blocks 30 positioned in adsorption regions R2 while the fluid passes through adsorption rotor 90 along the radial direction from the outer circumferential surface toward the inner circumferential surface.

The cleaned treatment target fluid is discharged as cleaned air F2 from adsorption regions R2 to cylinder hole 90a of adsorption rotor 90. Cleaned air F2 passes through cylinder hole 90a, and flows out through opening part 11a of first hollow disk 11. Cleaned air F2 having flowed through opening part 11a passes through first flow path formation member 2 and is discharged out of treatment chamber 1.

Heating fluid F3, such as heating air, is introduced into desorption regions R1. In desorption regions R1, the treatment target substance, such as the organic solvent adsorbed on adsorption element blocks 30, is desorbed, which regenerates adsorption element blocks 30, and generates a concentrated fluid having an increased concentration of the organic solvent.

To desorb the organic solvent, heating fluid F3 is introduced from inner circumferential side flow path formation member 4 to desorption regions R1. When heating fluid F3 introduced into desorption regions R1 passes through adsorption rotor 90, the organic solvent adsorbed on adsorption element blocks 30 positioned in desorption regions R1 is desorbed from these blocks by heat. The heating fluid containing the organic solvent is discharged as a concentrated fluid F4 from desorption regions R1 to outer circumferential side flow path formation member 5. Concentrated fluid F4 is discharged outside of treatment chamber 1, and is introduced into an aftertreatment device where aftertreatment, such as collection and combustion, is applied.

In adsorption treatment device 100, the treatment target substance adsorption treatment is applied to adsorption element blocks 30 positioned in adsorption regions R2, and the treatment target substance desorption treatment is applied to adsorption element blocks 30 positioned in desorption regions R1 after the adsorption treatment. Adsorption rotor 90 rotates about cylinder axis C, which allows adsorption element blocks 30 to move alternately between desorption regions R1 and adsorption regions R2, thus continuously executing the adsorption treatment and the desorption treatment of the treatment target substance.

Treatment target fluid F1 introduced into adsorption regions R2 is not limited to the exhaust gas containing the organic solvent. Heating fluid F3 introduced into desorption regions R1 is not limited to the heating air. For example, the fluid introduced into adsorption regions R2 may be drainage containing the organic solvent, or the fluid introduced into desorption regions R1 may be water vapor. In a case where the fluid flows as described above, inner circumferential side flow path formation member 4 and outer circumferential side flow path formation member 5, and desorption regions R1 are configured so as to communicate with each other in a liquid-tight manner.

In the embodiment described above, the case where partition parts 20 each have the substantially triangular cylindrical shape is exemplified and described. However, there is no limitation thereto. Only if the shape has a strength capable of supporting the pair of hollow disks 10 and allows the sealing member 40 to be arranged, the shape may be a plate shape or the like, and may be appropriately changed.

In the aforementioned embodiment, the example of a one-side open adsorption treatment device 100 is described where cylinder hole 90a of adsorption rotor 90 is only open at one sense in the axial direction of adsorption rotor 90 (the direction in which cylinder axis C extends), cleaned air F2 cleaned by adsorption rotor 90 flows in the upward direction in Fig. 1 and flows to first flow path formation member 2. Adsorption treatment device 100 in the embodiment may have a double-sided opening structure where cylinder hole 90a is open at both senses in the axial direction of adsorption rotor 90, and cleaned air F2 flows in both the upward and downward directions in Fig. 1.

A method of measuring the various characteristics of the adsorption element described above is as follows.

### [Toluene adsorption rate q of adsorption element]

Adsorption elements dried for 16 hours at 120°C were loaded in a U-shaped tube of the adsorption test device shown in Fig. 1 in Japanese Patent Laid-Open No. 9-94422, and were adjusted at a temperature of 25°C, nitrogen containing 3,800 ppm of toluene was caused to flow therethrough for 60 min., and the increase in weight of the adsorption elements was measured. The toluene adsorption rate q was obtained by the following equation. [q (wt%) = w1/w2 × 100]. Here, w1 is increase in weight (g) of the adsorption elements. w2 is a dry mass (g) of the adsorption elements.

### [Fiber diameter of activated-carbon-fiber]

A microscopic image was observed using an electron scanning microscope (product name SU1510 manufactured by Hitachi High-Technologies Corporation), the diameters of 100 or more fibers were read from the microscopic image, and the fiber diameter is obtained by averaging the read diameters of fibers. Note that the fiber diameter means the diameter of a fiber.

### [Weight per unit area of activated-carbon-fiber nonwoven fabric]

The activated-carbon-fiber nonwoven fabric was dried at 130°C for three hours, and subsequently the weight per unit area was measured and obtained with unit g/m².

### [Bulk density of activated-carbon-fiber nonwoven fabric]

The bulk density was obtained by dividing the weight per unit area by the thickness with unit kg/m³. Note that the thickness was measured using a measurement piece with an area of 4 cm², and with the load applied to the activated-carbon-fiber nonwoven fabric being 1.5 gf/cm².

### [Compressibility and compressive elastic modulus of activated-carbon-fiber nonwoven fabric]

The thickness of the activated-carbon-fiber nonwoven fabric was measured with an initial load of 0.02 kPa. Next, a load of 1.5 kPa was applied for one minute, and subsequently the thickness was measured in a state with the load being applied. The load was removed and the fabric was left for one minute, and subsequently, the thickness was measured again with an initial load of 0.02 kPa. The obtained numerical value of the thickness was used, and the compressibility (unit %) and the compressive elastic modulus (unit %) were calculated according to a calculation expression described in JIS L-1913 6.14.

### [Pressure loss of adsorption element blocks]

The adsorption element blocks were set in a ventilation pressure loss measurement jig, the pressure loss with ventilation at a wind speed of 3.0 m/s to the opening surface of introduction opening 131a was measured and obtained with a unit Pa.

### [Example of combined treatment system]

A treatment device that includes a pretreatment device that treats a treatment target fluid before introduction into adsorption treatment device 100, and/or an aftertreatment device that treats a desorption gas discharged from adsorption treatment device 100 may be provided.

The pretreatment device may be a filter for removing dust, a preliminary absorption unit provided with an adsorbent, such as granular activated carbon, impregnated activated carbon, activated alumina or zeolite, for removing deteriorated components of an adsorption element, a scrubber for removing a water-soluble component, a roll filter unit for removing paint mist, a gas cooler and/or a gas heater for adjusting the temperature or humidity of the treatment target fluid, a gas cooler and/or a separator for preliminarily liquidizing and collecting the treatment target fluid, a collection device provided with activated carbon or the like for preliminarily liquidizing and collecting the treatment target fluid or the like.

The aftertreatment device may be a combustion device that applies a combustion treatment to the desorption gas discharged from adsorption treatment device 100 (direct combustion, catalyst combustion, regenerative thermal combustion), a gas cooler and/or a separator that liquidizes and collects the desorption gas, a collection device provided with activated carbon or the like for liquidizing and collecting the desorption gas, a buffer device loaded with an adsorbent for equalizing the concentration of the desorption gas or the like.

The number of provided pretreatment facilities and/or the number of provided aftertreatment facilities may be one or more.

According to the present disclosure, in the adsorption element block, the adsorption rotor, the adsorption treatment device, and the treatment system, improvement in removing performance for the treatment target substance, improvement in concentration, long stability of removing performance for the treatment target substance, and reduction in size can be achieved.

Hereinafter, as other embodiments, other configurations of the adsorption element blocks having performances equivalent to those of adsorption element blocks 130 are described.

### [Embodiment 2: adsorption element block 140]

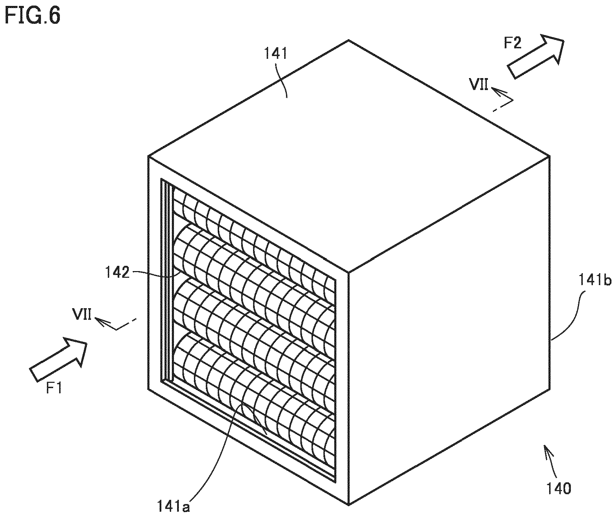

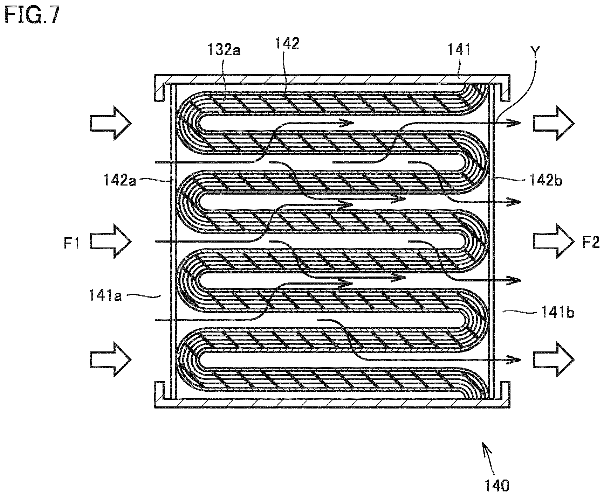

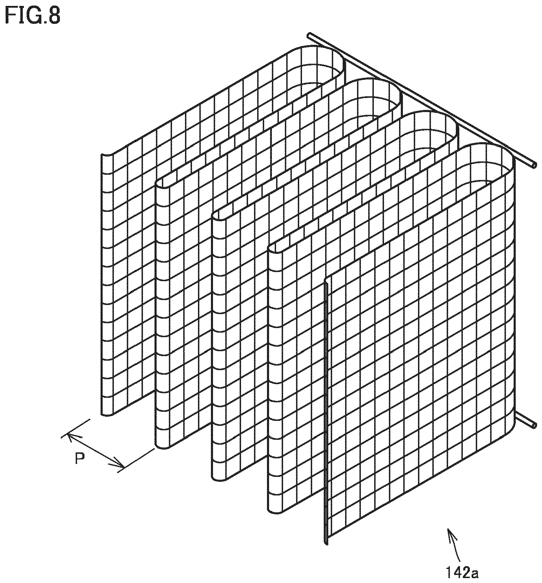

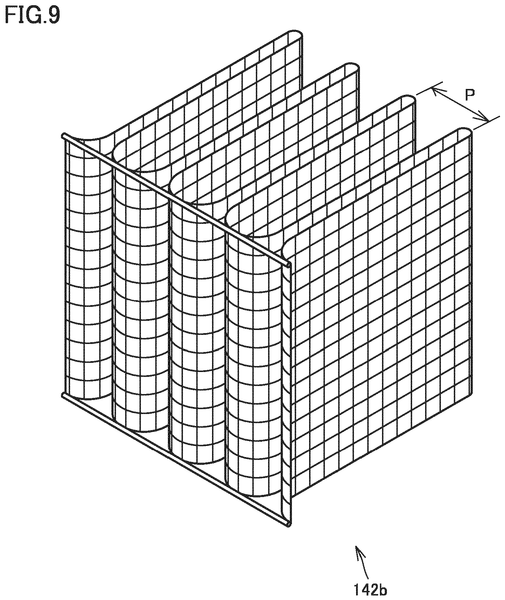

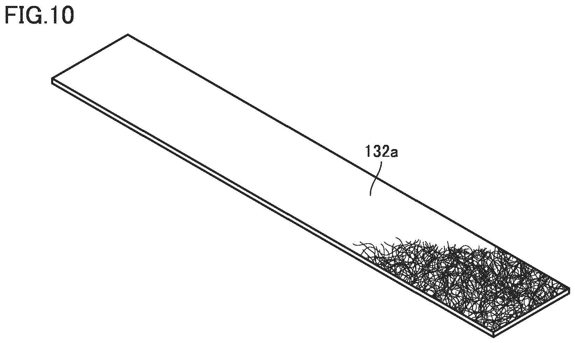

Referring to Figs. 6 to 10, adsorption element block 140 in the present embodiment is described. Fig. 6 is an entire perspective view of adsorption element block 140. Fig. 7 is a sectional view taken in an arrow direction of line VII-VII in Fig. 6. Fig. 8 is an entire perspective view of a first supporter 142a used for adsorption element block 140. Fig. 9 is an entire perspective view of a second supporter 142b used for adsorption element block 140. Fig. 10 is a developed view of an activated-carbon-fiber nonwoven fabric 132a used for adsorption element block 140.

In adsorption element block 140 in the present embodiment, the configuration of a housing 141 is the same as that of housing 131 in aforementioned Embodiment 1, and has an introduction opening 141a through which treatment target fluid F1 flows in, and a discharge opening 141b through which treatment target fluid F2 cleaned by adsorption element block 140 flows out. The configuration of an adsorption element 142 loaded in housing 141 is different.

As shown in the sectional structure diagram of Fig. 7, adsorption element 142 in the present embodiment includes, one or more corrugated, stacked strip-shaped sheets of activated-carbon-fiber nonwoven fabric 132a shown in Fig. 10 is loaded in rectangular parallelepiped housing 141 so that a plane formed by connecting the vertices of angled parts of corrugated shapes is perpendicular to the ventilation direction. In the present embodiment, five sheets of activated-carbon-fiber nonwoven fabric 132a are stacked.

Specifically, the corrugated-shaped (pleated-shaped) first supporter 142a made of mesh shown in Fig. 8, and the corrugated-shaped (pleated-shaped) second supporter 142b made of mesh shown in Fig. 9 are combined. Activated-carbon-fiber nonwoven fabric 132a is fixed between the corrugated shape made by combining first supporter 142a and second supporter 142b. Here, in the present embodiment, the pitch (P) of the angled parts of the mesh of first supporter 142a and second supporter 142b is, for example, 50 to 70 mm. The thickness of activated-carbon-fiber nonwoven fabric 132a is, for example, about 15 to 25 mm.

The material of the mesh used for first supporter 142a and second supporter 142b is only required to have a sufficient strength, heat resistance, chemical resistance and the like in a use condition. Preferably, a metal material, such as iron, stainless steel or aluminum, or a resin material, such as acrylic, Bakelite or melanine, is used.

According to the configuration of adsorption element block 140 in the present embodiment, activated-carbon-fiber nonwoven fabric 132a can be loaded in housing 141 with a high density while the ventilation flow path is secured. As a result, as indicated by arrows Y in Fig. 7, treatment target fluid F1 having flowed through the introduction opening 141a into adsorption element block 140 flows while necessarily intersecting with activated-carbon-fiber nonwoven fabric 132a.

Furthermore, according to the conventional honeycomb configuration, the fluid flows in a parallel direction with respect to the adsorption element surface. On the other hand, according to the present embodiment, the fluid flows while necessarily intersecting with activated-carbon-fiber nonwoven fabric 132a. Accordingly, the contact efficiency between the fluid and the adsorption element is significantly improved. As a result, the adsorption treatment capability when treatment target fluid F1 is caused to flow can be further improved. Furthermore, the desorption treatment capability when heating fluid F3 is caused to flow can be further improved.

### [Embodiment 3: adsorption element block 150]

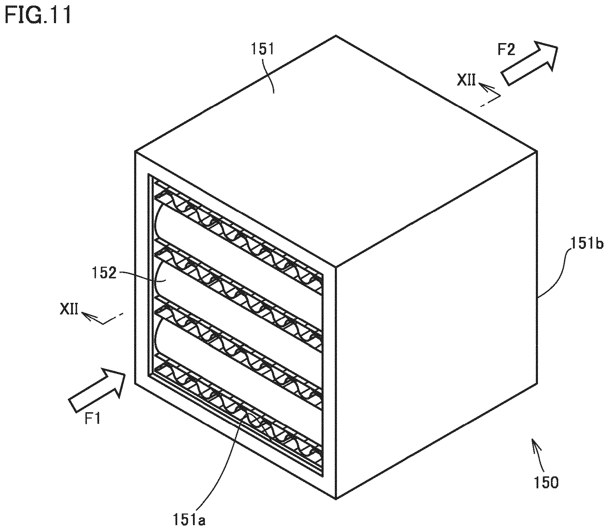

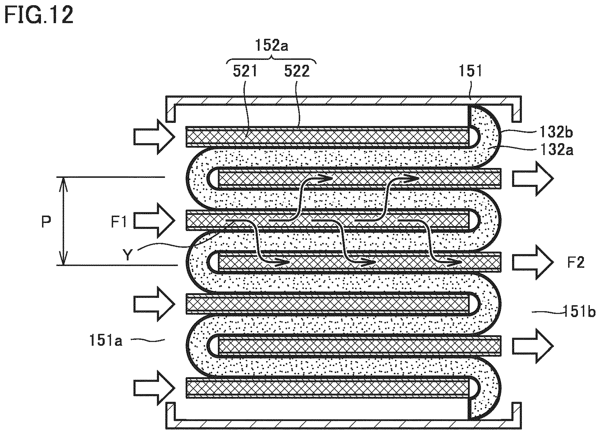

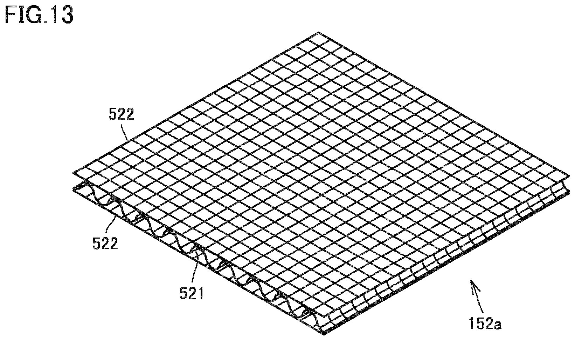

Next, referring to Figs. 11 to 13, an adsorption element block 150 in the present embodiment is described. Fig. 11 is an entire perspective view of adsorption element block 150 in the present embodiment. Fig. 12 is a sectional view taken in an arrow direction of line XII-XII in Fig. 11. Fig. 13 is an entire perspective view of a supporter 152a used for adsorption element block 150.

Adsorption element block 150 in the present embodiment is broadly different from adsorption element block 140 described above in the configuration of the supporter. Similar to each embodiment described above, the configuration of a housing 151 has an introduction opening 151a through which treatment target fluid F1 flows in, and a discharge opening 151b through which treatment target fluid F2 cleaned by adsorption element block 150 flows out.

As shown in the sectional structure diagram of Fig. 12, adsorption element 152 in the present embodiment includes, one or more corrugated, stacked strip-shaped sheets of activated-carbon-fiber nonwoven fabric 132a shown in Fig. 10 is loaded in rectangular parallelepiped housing 151 so that a plane formed by connecting the vertices of angled parts of corrugated shapes is perpendicular to the ventilation direction. In the present embodiment, five sheets of activated-carbon-fiber nonwoven fabric 132a are stacked. In the present embodiment, the outer surface of stacked activated-carbon-fiber nonwoven fabric 132a is covered with a protection nonwoven fabric 132b made of cotton for protection.

Specifically, as shown in Fig. 13, supporter 152a in the present embodiment has a plate shape allowing a corrugated mesh 521 to intervene between two sheets of flat meshes 522. The entire thickness is about 5 to 25 mm.

As shown in Fig. 12, supporters 152a are arranged so as to alternately intervene between activated-carbon-fiber nonwoven fabric 132a arranged in a corrugated manner. Here, in the present embodiment, the pitch (P) of supporters 152a is, for example, 50 to 70 mm. The thickness of activated-carbon-fiber nonwoven fabric 132a is, for example, about 15 to 25 mm.

By adopting this configuration, similar to adsorption element block 140 in Embodiment 2 described above, activated-carbon-fiber nonwoven fabric 132a can be loaded in housing 151 with a high density while the ventilation flow path is secured. As a result, as indicated by arrows Y in Fig. 12, treatment target fluid F1 having flowed through the introduction opening 151a into adsorption element block 150 flows while necessarily intersecting with activated-carbon-fiber nonwoven fabric 132a.

According to this configuration, reduction in the flow velocity of the treatment target fluid in housing 151 (in piping) due to the conventional honeycomb configuration, in particular, reduction on a discharge opening 151b side is suppressed, and without reduction in the flow velocity of treatment target fluid F1 in any region from introduction opening 151a to discharge opening 151b, treatment target fluid F1 can be allowed to pass through activated-carbon-fiber nonwoven fabric 132a. As a result, the treatment capability for treatment target fluid F1 by adsorption element block 150 can be further improved. Note that supporter 152a may be made only of corrugated mesh (pleated structure) 521 at a small pitch without flat meshes 522.

### [Embodiment 4: adsorption unit 30A]

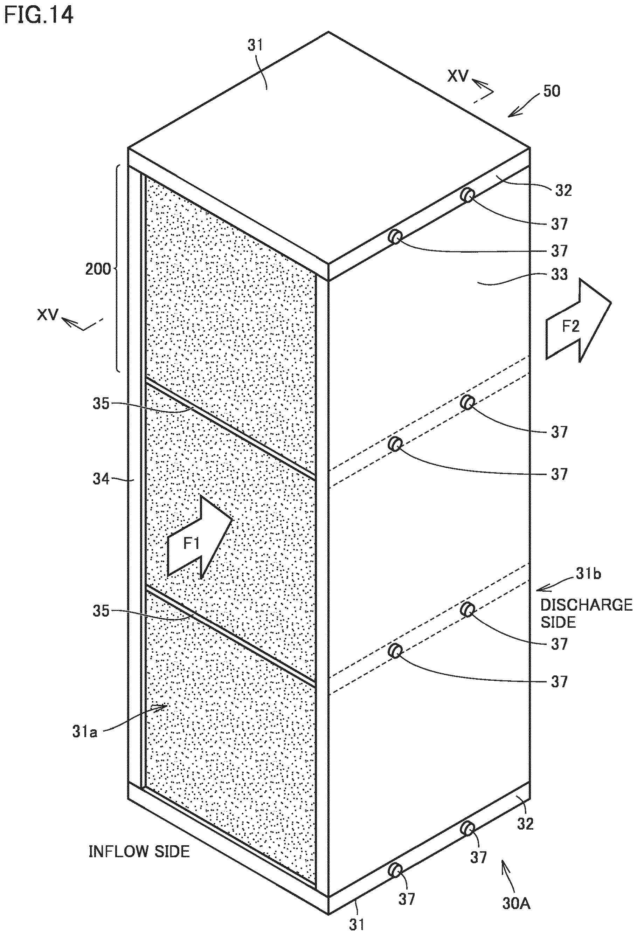

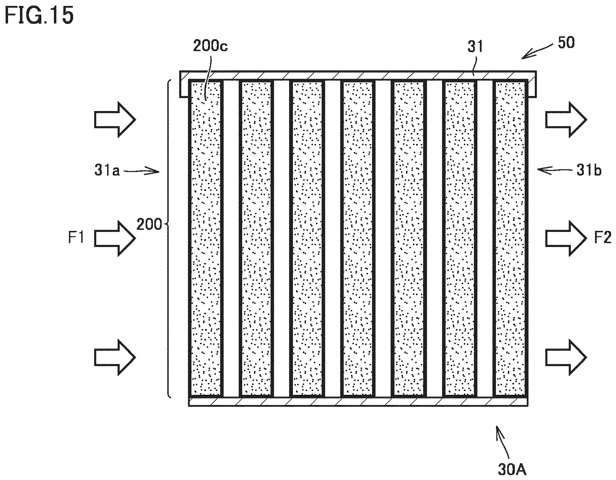

Adsorption element blocks 30 may be used as one unit. Note that the adsorption unit in the following description can be considered a single adsorption element block as a whole. A case where an adsorption unit 30A is used as an adsorption unit in the present embodiment is described with reference to Figs. 14 and 15. Fig. 14 is an entire perspective view of adsorption unit 30A. Fig. 15 is a sectional view taken in an arrow direction of line XV-XV in Fig. 14.

Adsorption unit 30A includes a rectangular housing 50, and adsorption element blocks 200. Housing 50 has an introduction opening 31a through which a treatment target fluid F1 flows in, and a discharge opening 31b through which treatment target fluid F2 cleaned by adsorption element blocks 200 flows out. The total amount of treatment target fluid F1 having flowed in through introduction opening 31a passes through activated-carbon-fiber nonwoven fabric 200c that is the adsorption element provided in each adsorption element block 200, and flows out through discharge opening 31b.

Housing 50 has a substantially box-like shape as a whole so as to form introduction opening 31a and discharge opening 31b. Introduction opening 31a and discharge opening 31b of a pair of side boards 33 positioned at the left and right are provided with flanges 34 that are bent inward. Flanges 32 that are bent inward are also provided over the entire periphery of lid members 31 provided at the top and bottom. By providing flanges 32 and 34, adsorption element blocks 200 can be prevented from protruding from housing 50.

As shown in Fig. 14, adsorption element blocks 200 are stacked in three tiers. Partition bodies 35 are arranged between stacked adsorption element blocks 200. Partition bodies 35 are provided from the inflow-side opening to the discharge-side opening, and divide stacked adsorption element blocks 200. By arranging partition bodies 35, contact and wear between adsorption element blocks 200 can be suppressed. Furthermore, adsorption element blocks 200 can be held also by partition bodies 35. The stability of the structure of stacked adsorption element blocks 200 can be improved.

The number of stacked adsorption element blocks 200, and the number of partition bodies 35 can be appropriately changed in accordance with the strength and performance required for adsorption unit 30A. Although depending on the number of stacked adsorption element blocks 200, it is preferable to provide partition bodies 35 so as to divide the entire body into two or five bodies.

In view of stacking of adsorption element blocks 200 when adsorption unit 30A is assembled, and in view of cleaning and replacement of adsorption element blocks 200 after adsorption unit 30A is assembled, it is preferable that housing 50 have a dividable structure. According to joining using welding, division is difficult once adsorption unit 30A is assembled. In a case of fastening by screws and bolts, disassembly is easy. However, the volumes for screws and bolts are required to be secured, which causes an unnecessary thickness.

Consequently, it is preferable to adopt, as fastening members, rivets 37 that allow easy disassembly and only require a small volume to be secured. Members to be fixed by rivets 37 are preliminarily provided with through-holes. In a case where no problem occurs even when the volume is increased, screws, bolts and the like may be used as fastening members. Note that in the diagrams, to clarify the attachment positions of rivets 37, the scale is different from the actual size for illustration.

To increase the opening area of housing 50, it is preferable that the material used for housing 50 be thin. However, it is required to maintain the strength for the structure. In consideration of these, an appropriate configuration may be adopted. Housing 50, partition bodies 35 and rivets 37 are only required to have a sufficient strength, heat resistance, chemical resistance and the like in a use condition. Preferably, a metal material, such as iron, stainless steel or aluminum, or a resin material, such as acrylic, Bakelite or melanine, is used.

As shown in Fig. 15, adsorption element block 200 includes plate-shaped activated-carbon-fiber nonwoven fabric 200c. A plurality layers of adsorption element blocks 200 are arranged along the direction of treatment target fluid F1. Activated-carbon-fiber nonwoven fabric 200c serving as adsorption elements is loaded in rectangular parallelepiped housing 50 so as to be orthogonal to the ventilation direction.

According to the adsorption unit in the present disclosure, the treatment target fluid can be treated at a high performance. Furthermore, the adsorption unit in the present disclosure can be used for the adsorption rotor, the adsorption treatment device and the treatment system described above. According to the adsorption rotor, the adsorption treatment device and the treatment system in the present disclosure, use of the adsorption unit in the present disclosure allows the treatment target fluid to be treated at a higher performance.

The configuration of activated-carbon-fiber nonwoven fabric 200c is similar to the configuration of activated-carbon-fiber nonwoven fabric 132a described above. Hereinafter, as other embodiments, other configurations of adsorption units having performances equivalent to those of aforementioned adsorption unit 30A are described.

### [Embodiment 5: adsorption unit 30B]

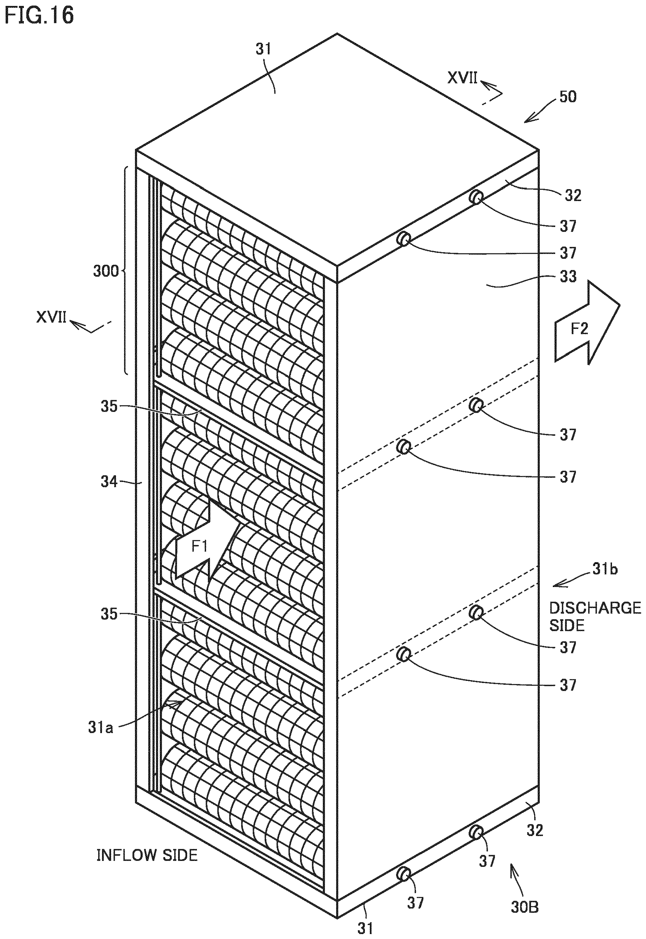

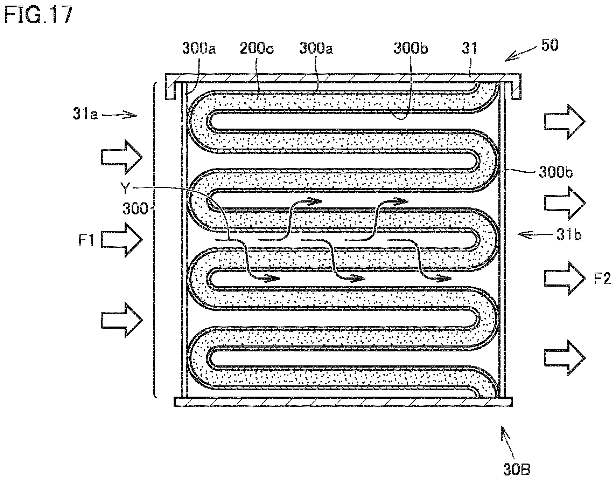

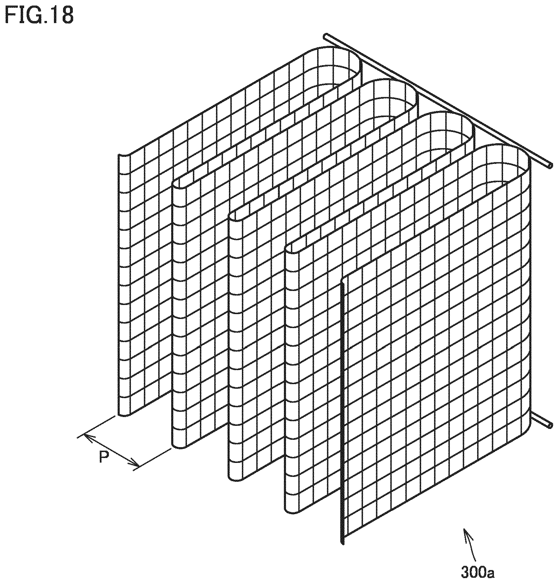

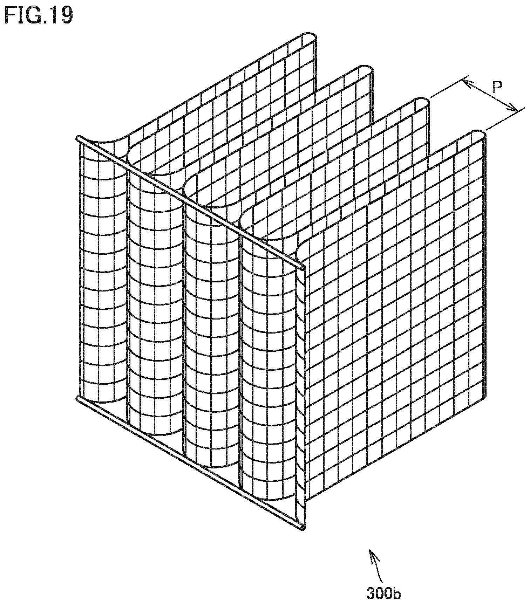

Referring to Figs. 16 to 19, an adsorption unit 30B in the present embodiment is described. Fig. 16 is an entire perspective view of adsorption unit 30B. Fig. 17 shows part of a sectional view taken in an arrow direction of line XVII-XVII in Fig. 16. Fig. 18 is an entire perspective view of a first supporter 300a used for adsorption unit 30B. Fig. 19 is an entire perspective view of a second supporter 300b used for adsorption unit 30B.

Adsorption unit 30B in the present embodiment has the same configuration of housing 50 as that of housing 50 in aforementioned Embodiment 4. Adsorption unit 30B has an introduction opening 31a through which a treatment target fluid F1 flows in, and a discharge opening 31b through which a treatment target fluid F2 cleaned by adsorption unit 30B flows out. Adsorption unit 30B is different in the configuration of adsorption element blocks 300 loaded in housing 50.

As shown in the sectional structure diagram of Fig. 17, adsorption element block 300 in the present embodiment includes, one or more stacked strip-shaped sheets of activated-carbon-fiber nonwoven fabric 200c in a corrugated manner are loaded in rectangular parallelepiped housing 50 so that a plane formed by connecting the vertices of angled parts of corrugated shapes is perpendicular to the ventilation direction. In the present embodiment, five sheets of activated-carbon-fiber nonwoven fabric 200c are stacked.

Specifically, corrugated-shaped (pleated-shaped) first supporter 300a made of mesh shown in Fig. 18, and corrugated-shaped (pleated-shaped) second supporter 300b made of mesh shown in Fig. 19 are combined. Activated-carbon-fiber nonwoven fabric 200c is fixed between the corrugated shape made by combining first supporter 300a and second supporter 300b. Here, in the present embodiment, the pitch (P) of the angled parts of the mesh of first supporter 300a and second supporter 300b is, for example, 50 to 70 mm. The thickness of activated-carbon-fiber nonwoven fabric 200c is, for example, about 15 to 25 mm.

The material of the mesh used for first supporter 300a and second supporter 300b is only required to have a sufficient strength, heat resistance, chemical resistance and the like in a use condition. Preferably, a metal material, such as iron, stainless steel or aluminum, or a resin material, such as acrylic, Bakelite or melanine, is used.

According to the configuration of adsorption unit 30B in the present embodiment, activated-carbon-fiber nonwoven fabric 200c can be loaded in housing 50 with a high density while the ventilation flow path is secured. As a result, as indicated by arrows Y in Fig. 17, treatment target fluid F1 having flowed through introduction opening 31a into adsorption unit 30B flows while intersecting with activated-carbon-fiber nonwoven fabric 200c.

Furthermore, reduction in the flow velocity of the treatment target fluid in housing 50 (in piping) due to the conventional honeycomb configuration, in particular, reduction on discharge opening 31b side is suppressed, and without reduction in the flow velocity of treatment target fluid F1 in any region from introduction opening 31a to discharge opening 31b, treatment target fluid F1 can be allowed to pass through activated-carbon-fiber nonwoven fabric 200c. As a result, the treatment capability for treatment target fluid F1 by adsorption unit 30B can be further improved.

### [Embodiment 6: adsorption unit 30C]

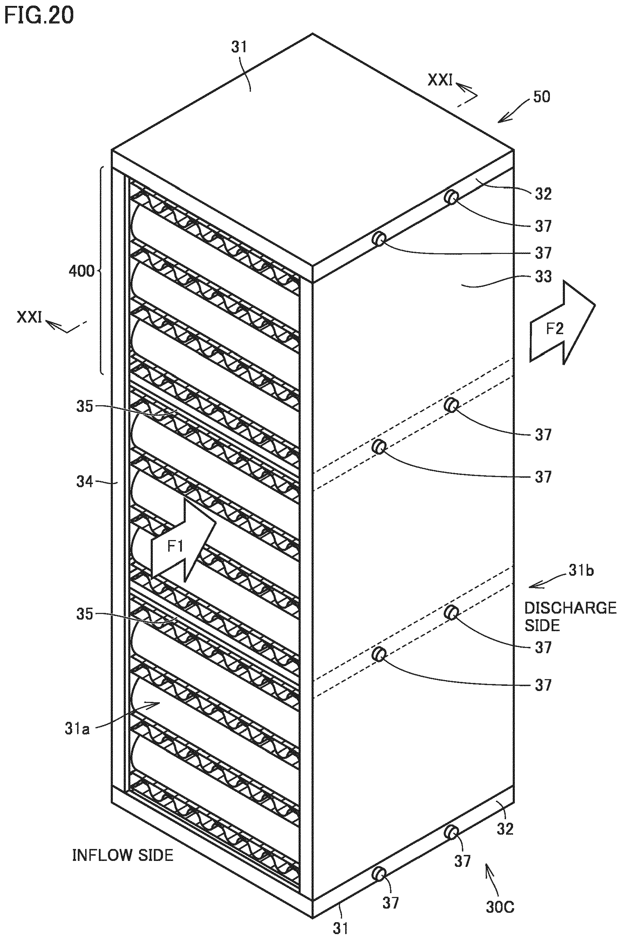

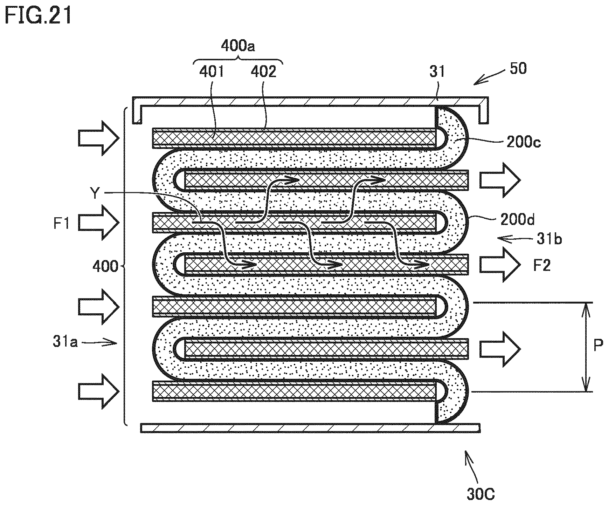

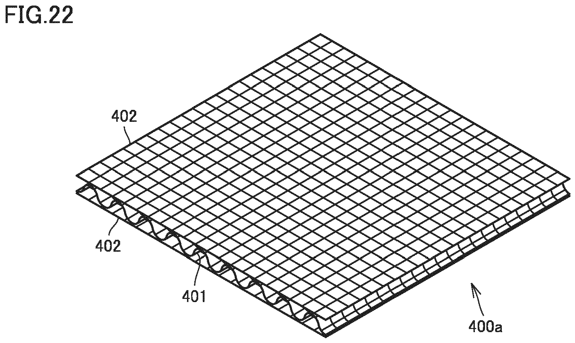

Next, referring to Figs. 20 to 22, an adsorption unit 30C in the present embodiment is described. Fig. 20 is an entire perspective view of adsorption unit 30C in the present embodiment. Fig. 21 shows part of a sectional view taken in an arrow direction of line XXI-XXI in Fig. 20. Fig. 22 is an entire perspective view of a supporter 400a used for adsorption unit 30C.

Adsorption unit 30C in the present embodiment is broadly different from adsorption unit 30B in the configuration of the supporter. The configuration of housing 50 is similar to that of each embodiment described above. Adsorption unit 30C has an introduction opening 31a through which a treatment target fluid F1 flows in, and a discharge opening 31b through which a treatment target fluid F2 cleaned by adsorption unit 30C flows out.

As shown in the sectional structure diagram of Fig. 21, an adsorption element block 400 in the present embodiment includes, one or more stacked strip-shaped sheets of activated-carbon-fiber nonwoven fabric 200c in a corrugated manner are loaded in the rectangular parallelepiped housing 50 so that a plane formed by connecting the vertices of angled parts of corrugated shapes is perpendicular to the ventilation direction. In the present embodiment, five sheets of activated-carbon-fiber nonwoven fabric 200c are stacked. In the present embodiment, the outer surface of stacked activated-carbon-fiber nonwoven fabric 200c is covered with a protection nonwoven fabric 200d made of cotton for protection.

Specifically, as shown in Fig. 22, supporter 400a in the present embodiment has a plate shape allowing a corrugated mesh 401 to intervene between two sheets of flat meshes 402. The entire thickness is about 5 to 25 mm.

As shown in Fig. 21, supporters 400a are arranged so as to alternately intervene between activated-carbon-fiber nonwoven fabric 200c arranged in a corrugated manner. Here, in the present embodiment, the pitch (P) of supporters 400a is, for example, 50 to 70 mm. The thickness of activated-carbon-fiber nonwoven fabric 200c is, for example, about 15 to 25 mm.

Similar to adsorption unit 30B in Embodiment 5 described above, by adopting this configuration, activated-carbon-fiber nonwoven fabric 200c can be loaded in housing 50 with a high density while the ventilation flow path is secured. As a result, as indicated by arrows Y in Fig. 21, treatment target fluid F1 having flowed through introduction opening 31a into adsorption unit 30C flows while intersecting with activated-carbon-fiber nonwoven fabric 200c.

According to this configuration, reduction in the flow velocity of the treatment target fluid in housing 50 (in piping) due to the conventional honeycomb configuration, in particular, reduction on discharge opening 31b side is suppressed, and without reduction in the flow velocity of treatment target fluid F1 in any region from introduction opening 31a to discharge opening 31b, treatment target fluid F1 can be allowed to pass through activated-carbon-fiber nonwoven fabric 200c. As a result, the treatment capability for treatment target fluid F1 by adsorption unit 30C can be further improved. Note that supporter 400a may be made only of corrugated mesh (pleated structure) 401 at a small pitch without flat meshes 402.

### [Embodiment 7: adsorption unit 30D]

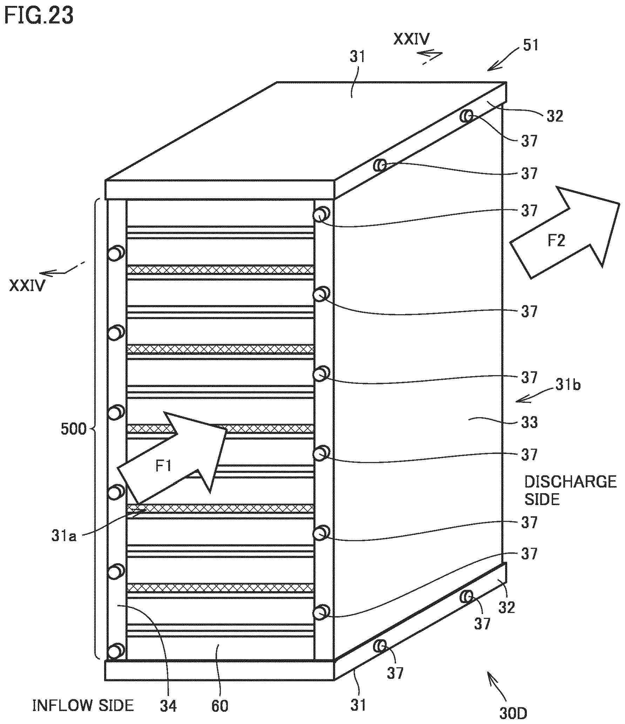

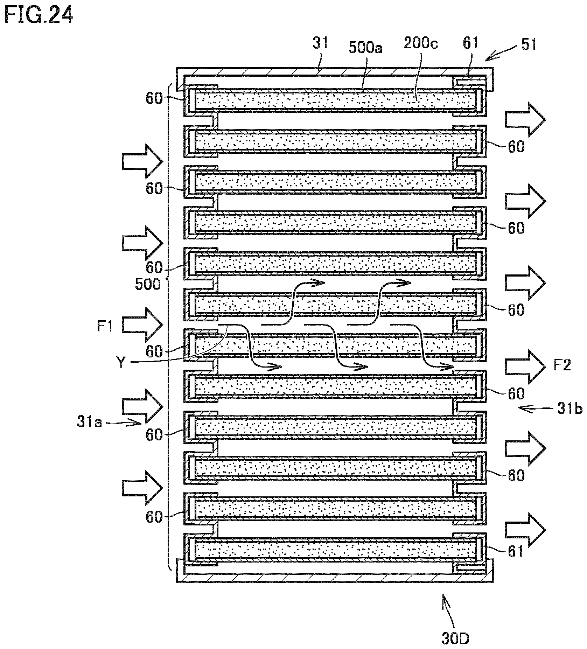

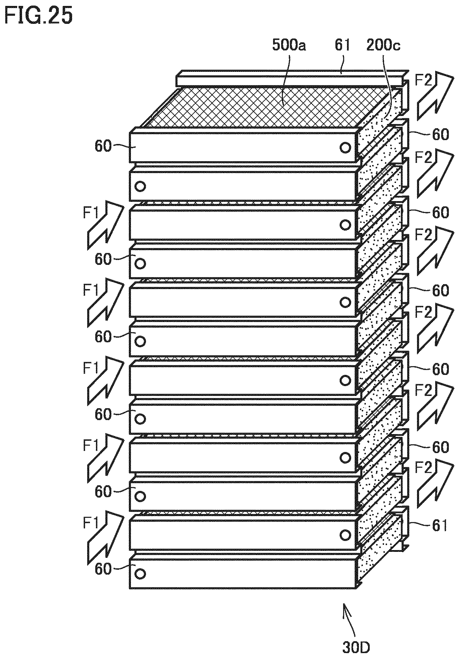

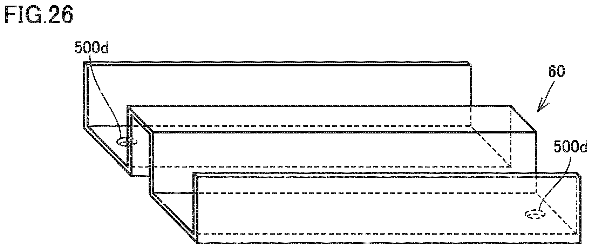

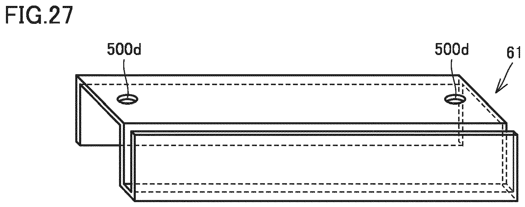

Next, referring to Figs. 23 to 27, an adsorption unit 30D in the present embodiment is described. Fig. 23 is an entire perspective view of adsorption unit 30D in the present embodiment. Fig. 24 is a sectional view taken in an arrow direction of line XXIV-XXIV in Fig. 23. Fig. 25 is an entire perspective view of adsorption unit 30D in a state where a housing 51 is taken out. Fig. 26 is a perspective view showing a first partition member 60. Fig. 27 is a perspective view showing a second partition member 61.

Adsorption unit 30D includes a rectangular housing 51, and an adsorption element block 500. Housing 51 has an introduction opening 31a through which a treatment target fluid F1 flows in, and a discharge opening 31b through which a treatment target fluid F2 cleaned by the adsorption element blocks 500 flows out. The total amount of treatment target fluid F1 having flowed in through introduction opening 31a passes through activated-carbon-fiber nonwoven fabric 200c that is the adsorption element provided in each adsorption element block 500, and flows out through discharge opening 31b.

Adsorption unit 30D in the present embodiment is different from each embodiment described above in that an introduction opening 31a side and a discharge opening 31b side of housing 51 are covered with the partition members. As shown in Fig. 25, first partition members 60 on the introduction opening 31a side are fixed to flange 34 with rivets 37. Six first partition members 60 are fixed to flange 34 on the introduction opening 31a side. Each first partition member 60 is obliquely fixed to flange 34 with rivets 37 at two points. Treatment target fluid F1 flows through the gap between first partition members 60.

As shown in the sectional structure diagram of Fig. 24, a plurality of adsorption element blocks 500 in the present embodiment are stacked and loaded in rectangular parallelepiped housing 51 so as to orient plate-shaped activated-carbon-fiber nonwoven fabric 200c that is an adsorption element in parallel with the ventilation direction.

As shown in Figs. 24 and 25, activated-carbon-fiber nonwoven fabric 200c is arranged so as to intervene between two flat meshes 500a. Activated-carbon-fiber nonwoven fabric 200c is supported by first partition members 60 shown in Fig. 26 and second partition members 61 shown in Fig. 27.

As shown in Fig. 26, first partition member 60 is provided with two grooves by bending one plate to clamp activated-carbon-fiber nonwoven fabric 200c. Hole parts 500d are provided at two positions on a diagonal that intersects with the two grooves.

As shown in Fig. 27, second partition member 61 is provided with a groove by bending one plate to clamp activated-carbon-fiber nonwoven fabric 200c. Hole parts 500d are provided at positions on the opposite ends of the groove.

As shown in Figs. 24 and 25, first partition members 60 are arranged at six positions at intervals. On the discharge opening 31b side, second partition members 61 are arranged at positions in contact with lid members 31 at the top and the bottom. Between them, at intervals, first partition members 60 are arranged at five positions. First partition members 60 and second partition members 61 are fixed to housing 51 with rivets 37 that are through the through-holes of flange 34 of housing 51 and hole parts 500d. As shown in Figs. 23 and 25, first partition member 60 is fixed at the two positions on the diagonal. Accordingly, the number of rivets 37 can be reduced in comparison with a case of fixation at four crossing points.

In adsorption element block 500 in the present embodiment, activated-carbon-fiber nonwoven fabric 200c is supported by first partition member 60 on the introduction opening 31a side, and first partition member 60 and second partition member 61 on the discharge opening 31b side. Accordingly, activated-carbon-fiber nonwoven fabric 200c is not required to be held at the position of the pair of side boards 33.

As shown in Fig. 24, first partition members 60 and second partition members 61 in the present embodiment are arranged at positions alternately displaced in the vertical direction from the flow direction of treatment target fluid F1. Adsorption unit 30D can provide a flow path for treatment target fluid F1 that intersects with activated-carbon-fiber nonwoven fabric 200c in a state where activated-carbon-fiber nonwoven fabric 200c is flat without being bent.

According to the configuration of adsorption unit 30D in the present embodiment, activated-carbon-fiber nonwoven fabric 200c can be loaded in housing 51 with a high density while the ventilation flow path is secured. As a result, as indicated by arrows Y in Fig. 24, treatment target fluid F1 having flowed through introduction opening 31a into adsorption unit 30D flows while intersecting with activated-carbon-fiber nonwoven fabric 200c.

Furthermore, reduction in the flow velocity of the treatment target fluid in housing 51 (in piping) due to the conventional honeycomb configuration, in particular, reduction on the discharge opening 31b side is suppressed, and without reduction in the flow velocity of treatment target fluid F1 in any region from introduction opening 31a to discharge opening 31b, treatment target fluid F1 can be allowed to pass through activated-carbon-fiber nonwoven fabric 200c. As a result, the treatment capability for treatment target fluid F1 by adsorption unit 30D can be further improved.

The number of grooves of first partition member 60 in the present embodiment may be increased to three or more. The total number tiers of activated-carbon-fiber nonwoven fabric 200c is 12. However, the number of tiers may be increased or reduced.

### [Embodiment 8: adsorption unit 30E]

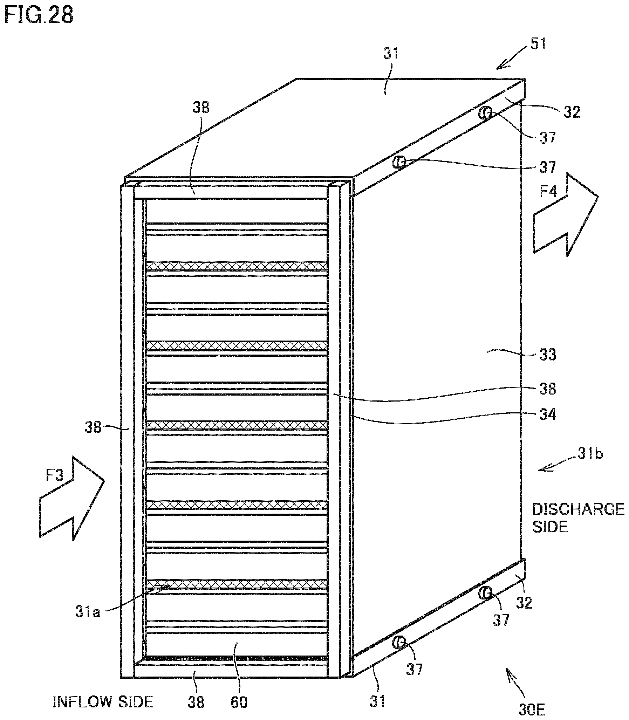

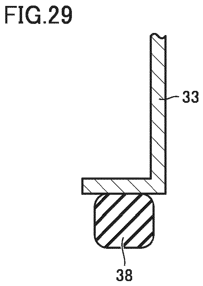

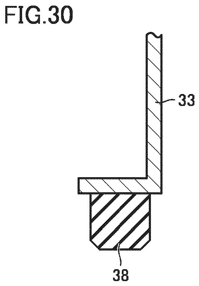

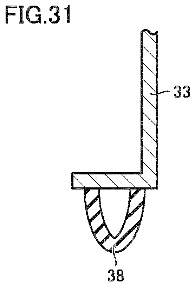

Referring to Figs. 28 to 31, an adsorption unit 30E is described. Fig. 28 is an entire perspective view showing adsorption unit 30E. Figs. 29 to 31 show a cross-sectional structure of a sealing member 38.

Adsorption unit 30E has the same basic configuration as adsorption unit 30D shown in Fig. 23. The difference is in that a flange 32 and a flange 34 at the inflow-side opening are provided with respective sealing members 38 so as to encircle opening of housing 51. As shown in Figs. 1 to 3, by providing sealing member 38, the hermeticity of the flow path in the case of arrangement in cylindrical rotor 90 of adsorption treatment device 100 can be improved.

Adsorption unit 30E shown in Fig. 28 is illustrated in a case where sealing member 38 is provided only on the inflow side of heating fluid F3. However, any example between a case where sealing member 38 is provided only on the discharge side, and a case where the members are provided on the inflow side and the discharge side may be adopted.

The sealing members 38 are fixed to flange 32 and flange 34 with an adhesive or the like. Preferably, sealing member 38 is made of an elastic member; a rubber material is particularly preferable. The rubber material may be selected in consideration of the strength, chemical resistance and the like depending on a use condition.

Figs. 29 to 31 show cross-sectional shapes of sealing members 38. Besides what is illustrated, any of various cross-sectional shapes may be adopted for sealing member 38.

The configuration of sealing member 38 in Embodiment 8 may be applied to the other embodiments described above or described later.

### [Embodiment 9: adsorption unit 30F]

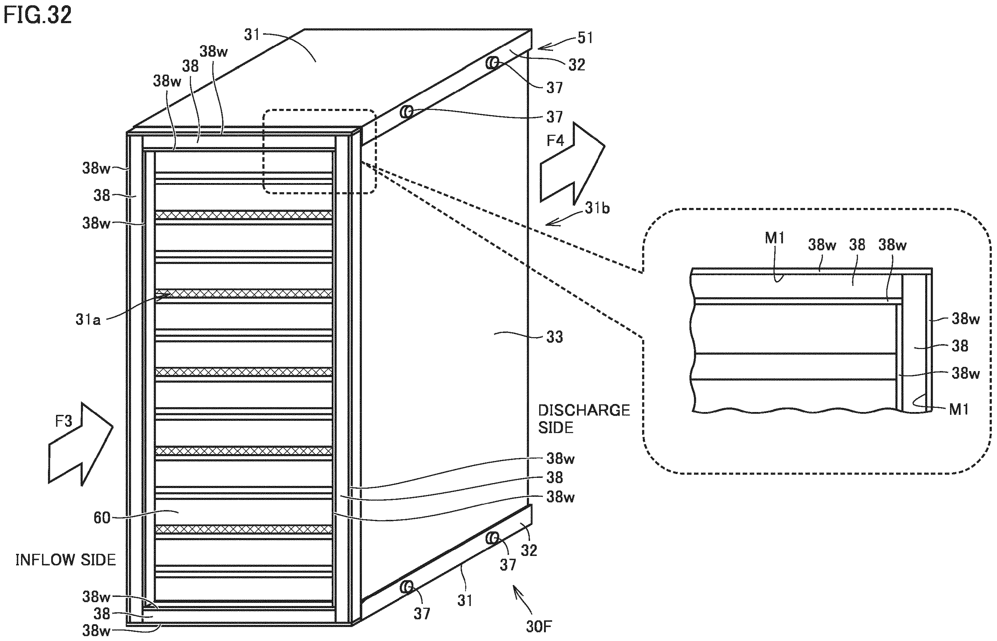

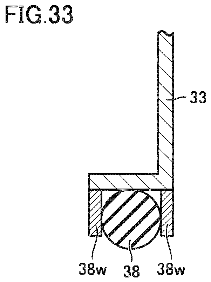

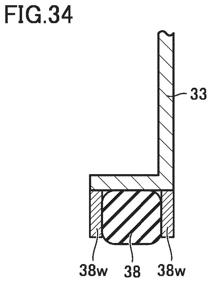

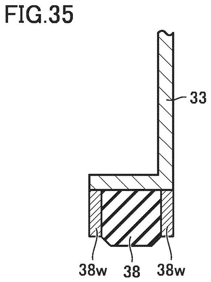

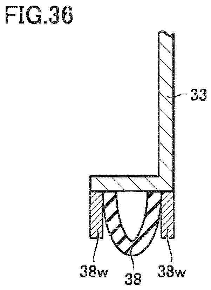

Referring to Figs. 32 to 36, an adsorption unit 30F is described. Fig. 32 is an entire perspective view showing adsorption unit 30F. Figs. 33 to 36 show cross-sectional structures of an annular groove M1 and a sealing member 38.

Adsorption unit 30F has the same basic configuration as adsorption unit 30E shown in Fig. 28. The difference is in that a flange 32 and a flange 34 at the inflow-side opening are provided with a pair of wall parts 38w so as to constitute annular groove M1, and sealing member 38 is arranged in annular groove M1. Preferably, wall parts 38w is made of the same material as that of housing 51, and is integrated with housing 51. For example, any of fixation using rivets, fixation by welding or the like may be adopted. The inner depth of annular groove M1 is about 10 mm. The inner width is about 20 mm.

Figs. 33 to 36 show cross-sectional shapes of sealing members 38. Besides what is illustrated, any of various cross-sectional shapes may be adopted for sealing member 38.

As described above, sealing member 38 is arranged in annular groove M1, which prevents sealing member 38 from being displaced and damaged. Accordingly, the hermeticity of the flow path in the case of arrangement in cylindrical rotor 90 of adsorption treatment device 100 can be further improved.

### [Embodiment 10: adsorption unit 30G]

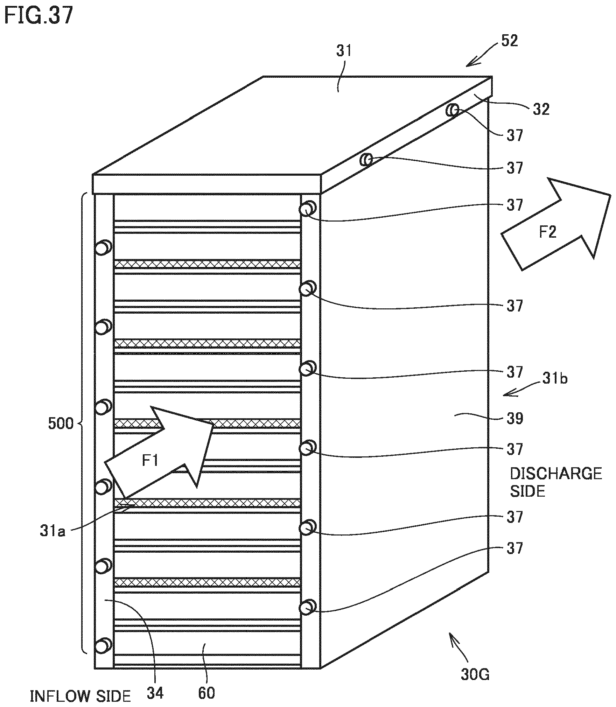

Referring to Fig. 37, an adsorption unit 30G having another configuration is described. Fig. 37 is an entire perspective view showing adsorption unit 30G.

Adsorption unit 30G has the same basic configuration as adsorption unit 30D shown in Fig. 23. The difference is in that a housing 52 is bent to be oriented in three directions and constitutes a frame 39, and a lid member 31 is provided as a top board. Adsorption unit 30G requires no lid member 31 on a bottom surface. Accordingly, the number of rivets 37 for fixing lid member 31 to frame 39 can be reduced.

In the embodiments described above, any of the structure of sealing member 38 of adsorption unit 30E, the structures of annular groove M1 and sealing member 38 of adsorption unit 30F, and the structure of frame 39 of adsorption unit 30G may be applied to any of adsorption unit 30A, adsorption unit 30B and adsorption unit 30C. As described above, the structure of each embodiment may be appropriately combined with an optimal structure.

In the embodiments described above, as shown in Fig. 15, adsorption unit 30B and adsorption unit 30C may allow activated-carbon-fiber nonwoven fabric 200c to be loaded in rectangular parallelepiped housing 50 so that the adsorption surface of the fabric is perpendicular to the ventilation direction.

### [Embodiment 11: adsorption unit 30H]

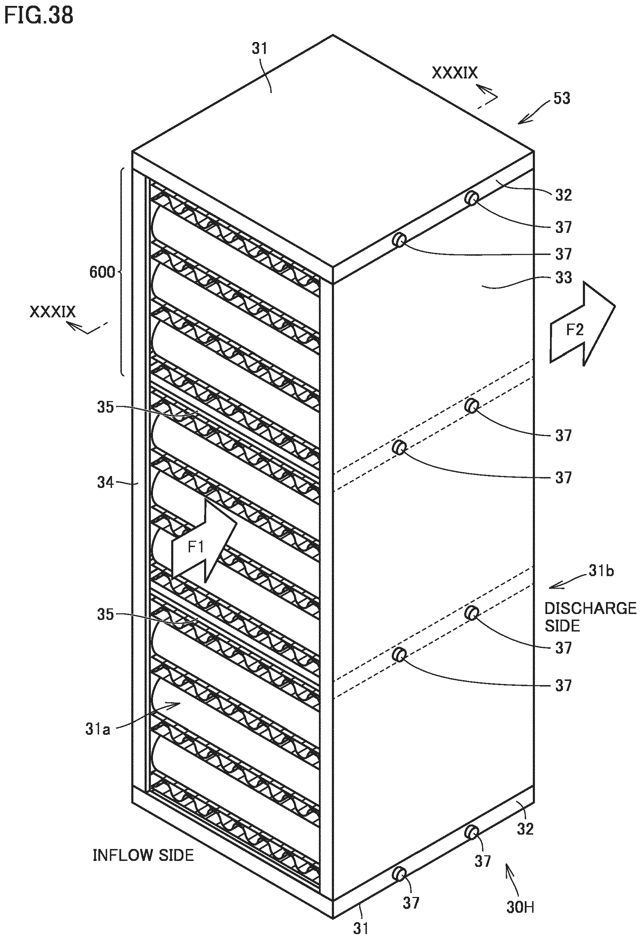

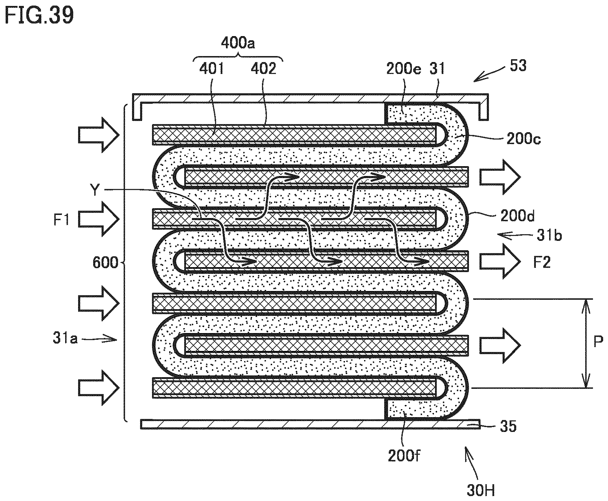

Referring to Figs. 38 and 39, an adsorption unit 30H having another configuration is described. Fig. 38 is an entire perspective view of adsorption unit 30H. Fig. 39 is part of a sectional view taken in an arrow direction of line XXXIX-XXXIX in Fig. 38.

Adsorption unit 30H has the same basic configuration as adsorption unit 30C shown in Fig. 20. The difference is in the shape of strip-shaped activated-carbon-fiber nonwoven fabric 200c arranged in housing 53. Similar to housing 52 of adsorption unit 30G, housing 53 of adsorption unit 30H may be what is bent to be oriented in three directions.

As shown in the sectional structure diagram of Fig. 39, adsorption element block 600 at an upper end of the present embodiment has a structure where an upper end part 200e of activated-carbon-fiber nonwoven fabric 200c intervenes between lid member 31 and supporter 400a, and a lower end part 200f of activated-carbon-fiber nonwoven fabric 200c intervenes between partition body 35 and supporter 400a.

Adsorption element block 600 at a center part has a structure where upper end part 200e of activated-carbon-fiber nonwoven fabric 200c intervenes between partition body 35 and supporter 400a, and lower end part 200f of activated-carbon-fiber nonwoven fabric 200c intervenes between partition body 35 and supporter 400a. Adsorption element block 600 at a lower part has a structure where upper end part 200e of activated-carbon-fiber nonwoven fabric 200c intervenes between partition body 35 and supporter 400a, and lower end part 200f of activated-carbon-fiber nonwoven fabric 200c intervenes between lid member 31 and supporter 400a.

Adsorption unit 30H appropriately clamps activated-carbon-fiber nonwoven fabric 200c between lid member 31, partition body 35 and supporter 400a, which can prevent positional deviation or the like from occurring.

### [Embodiment 12: adsorption unit 30I]

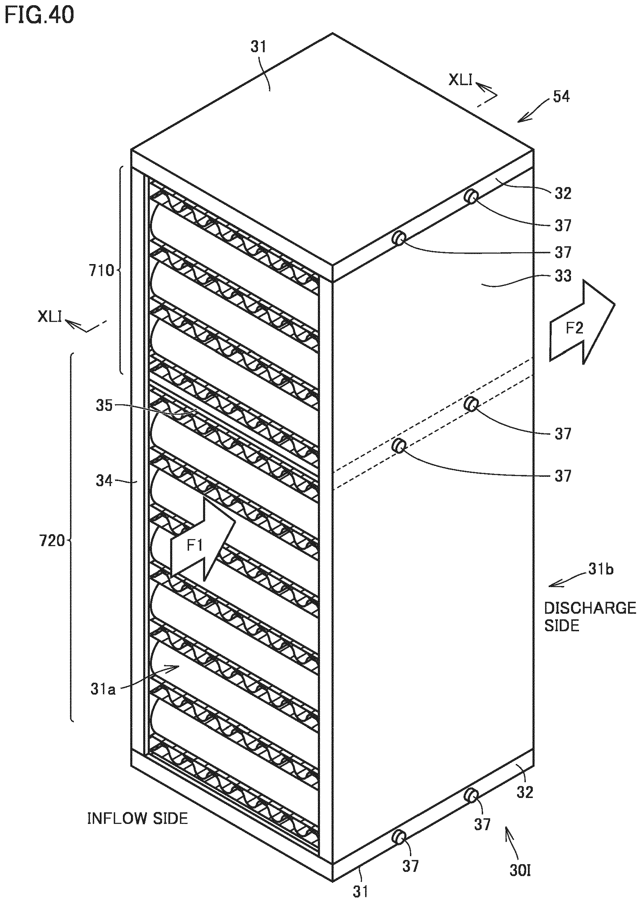

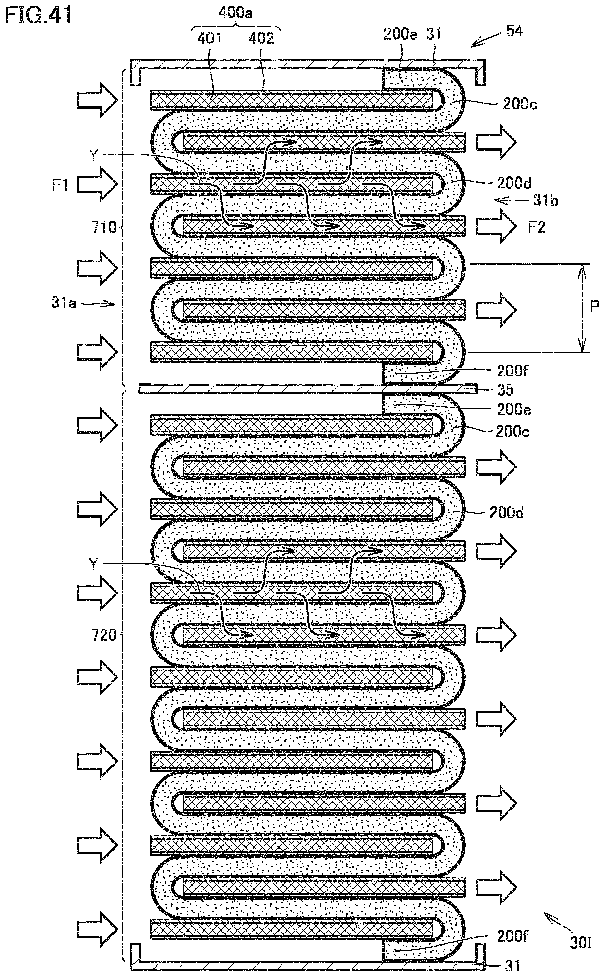

Referring to Figs. 40 and 41, an adsorption unit 30I having another configuration is described. Fig. 40 is an entire perspective view of adsorption unit 30I. Fig. 41 is part of a sectional view taken in an arrow direction of line XLI-XLI in Fig. 40.

Adsorption unit 30I has the same basic configuration as adsorption unit 30H shown in Fig. 38. The difference is in the positional relationship between an upper adsorption element block 710 and a lower adsorption element block 720 that are arranged in a housing 54. Similar to housing 52 of adsorption unit 30G, housing 54 of adsorption unit 30I may be what is bent to be oriented in three directions.

As shown in the sectional structure diagram of Fig. 41, adsorption element block 710 at an upper end in the present embodiment has a structure where an upper end part 200e of activated-carbon-fiber nonwoven fabric 200c intervenes between lid member 31 and supporter 400a, and a lower end part 200f of activated-carbon-fiber nonwoven fabric 200c intervenes between partition body 35 and supporter 400a.

Adsorption element block 720 at a lower part in the present embodiment has a structure where upper end part 200e of activated-carbon-fiber nonwoven fabric 200c intervenes between partition body 35 and supporter 400a, and lower end part 200f of activated-carbon-fiber nonwoven fabric 200c intervenes between lid member 31 and supporter 400a.

As shown in Fig. 41, adsorption element block 710 at the upper part and adsorption element block 720 at the lower part occupy the position in the height direction at a ratio of about 1: 2 with respect to housing 54. Adsorption element block 710 at the upper part and adsorption element block 720 at the lower part are partitioned by a partition body 35. The end parts of partition body 35 are bent to have L-shapes, and are fixed respectively to side boards 33 with rivets 37.

### [Embodiment 13: adsorption unit 30J]

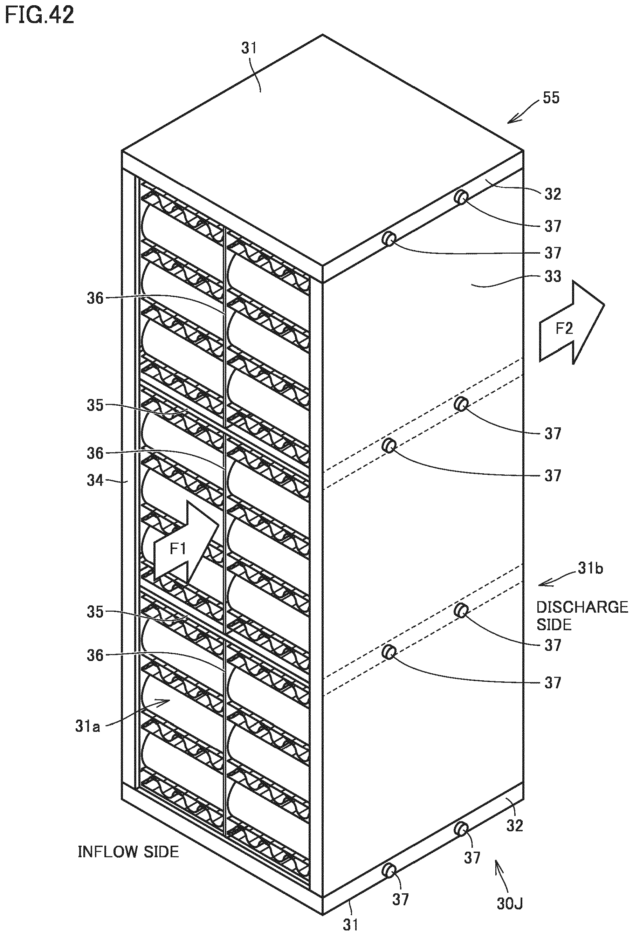

Referring to Fig. 42, an adsorption unit 30J having another configuration is described. Fig. 42 is an entire perspective view showing adsorption unit 30J.

Adsorption unit 30J has the same basic configuration as adsorption unit 30H shown in Fig. 38. The difference is in that a partition body 36 in the vertical direction is arranged in a housing 55. In adsorption unit 30J, sheets of activated-carbon-fiber nonwoven fabric 200c are arranged to the left and right of partition body 36 in the vertical direction. Similar to housing 52 of adsorption unit 30G, housing 55 of adsorption unit 30J may be what is bent to be oriented in three directions.

Adsorption unit 30J allows each of regions partitioned by partition bodies 35 in the lateral direction and partition body 36 in the vertical direction to function as one adsorption element block. Similar to partition bodies 35, the material of partition body 36 is only required to have a sufficient strength, heat resistance, chemical resistance and the like in a use condition. Preferably, a metal material, such as iron, stainless steel or aluminum, or a resin material, such as acrylic, Bakelite or melanine is used.

A plurality of partition bodies 36 in the vertical direction may be provided in a single housing. The number of partition bodies 35 in the lateral direction and the number of partition bodies 36 in the vertical direction to be used may be appropriately changed dependent on the size of the housing.

The embodiments disclosed this time are examples in all aspects, and should be construed not to be in a limiting manner. It is intended that the scope of the present disclosure is indicated by the claims not by the description of the aforementioned embodiments, and encompasses all changes in a sense of equivalence to and the scope of the claims.

### REFERENCE SIGNS LIST

1 Treatment chamber, 2 Flow path formation member, 3 Motor, 4 Inner circumferential side flow path formation member, 4a Inner circumferential side opening end part, 4b, 4c Inner circumferential side curved surface, 5 Outer circumferential side flow path formation member, 5a Outer circumferential side opening end part, 5b, 5c Outer circumferential side curved surface, 6 Support member, 10 Hollow disk, 11 First hollow disk, 12 Second hollow disk, 20 Partition part, 21 Main body part, 22 Sealing part, 23 Inner-circumferential-side sealing part, 23a, 24a Sealing surface, 24 Outer-circumferential-side sealing part, 30, 30A, 30B, 30C, 30D, 30E, 30F, 30G Adsorption unit, 31 Lid member, 31a Introduction opening, 31b Discharge opening, 32, 34 Flange, 33 Side board, 35 Partition body, 37 Rivet, 40 Sealing member, 41 Inner-side sealing member, 42 Outer-side sealing member, 50, 51, 52 Housing, 60 First partition member, 61 Second partition member, 90 Adsorption rotor, 90a Cylinder hole, 100 Adsorption treatment device, 130, 140, 150 Adsorption element block, 131, 141, 151 Housing, 131a, 141a, 151a Introduction opening, 131b, 141b, 151b Discharge opening, 132, 142, 152 Adsorption element, 132a Activated-carbon-fiber nonwoven fabric, 132b Protection nonwoven fabric, 142a First supporter, 142b Second supporter, 152a Supporter, 200, 300, 400, 500 Adsorption element block, 200c Activated-carbon-fiber nonwoven fabric, 521 corrugated mesh, 522 Flat mesh.

## Claims

1. A hollow cylindrical adsorption rotor (90) rotating about a cylinder axis (C), the adsorption rotor (90) comprising:
a plurality of adsorption element blocks (140) loaded with adsorption elements (142) through which gas can pass; and
a plurality of partition parts (60) through which no gas can pass,
wherein the adsorption element blocks (140) and the partition parts (60) are arranged alternately in a circumferential direction about the cylinder axis, and
each of the adsorption element blocks (140) comprises
a housing (141) that has an introduction opening (141Pa) and a discharge opening (141b); and an adsorption element (142) which is loaded in the housing (141), and allows gas to pass through this adsorption element (142),
wherein the housing (141) allows all the gas introduced from the introduction opening (141a) to pass through the adsorption element (142) and subsequently be discharged through the discharge opening (141b),
the adsorption element (142) includes an activated-carbon-fiber nonwoven fabric (132a), and
measured in accordance with the description, the activated-carbon-fiber nonwoven fabric has a total weight per unit area of 600 to 6,000 g/m², a toluene adsorption rate of 25 to 75 wt%, and a fiber diameter of 15 to 120 µm.

2. The hollow cylindrical adsorption rotor (90) according to claim 1, wherein the adsorption element (142) is arranged so as to allow the gas to flow in an intersecting manner.

3. The hollow cylindrical adsorption rotor (90) according to claim 1, wherein, measured in accordance with the description, the activated-carbon-fiber nonwoven fabric has a bulk density of 50 to 200 kg/m³, a compressibility of 30% or less, and a compressive elastic modulus of 80% or more.

4. The hollow cylindrical adsorption rotor (90) according to claim 1, wherein a plurality of the adsorption elements (142) are arranged to be stacked in the housing (141).

5. The hollow cylindrical adsorption rotor (90) according to claim 1, wherein the single adsorption element (142) is folded and is arranged to be stacked in the housing (141).

6. An adsorption treatment device (100), comprising:
the adsorption rotor (90) according to any of claims 1-5; and
a flow path formation member (2, 4, 5) that forms a flow path for the gas to flow through the adsorption element blocks (140) provided for the adsorption rotor (90).

7. The adsorption treatment device (100) according to claim 6, wherein the flow path formation member (2, 4, 5) forms the flow path for the gas so as to allow a heating gas to pass in a radial direction about the cylinder axis through the adsorption element blocks (140) positioned at set rotation phases in rotation of the adsorption rotor (90), the heating gas being for desorbing an organic solvent from a treatment target gas containing the organic solvent or the adsorption element.

8. A treatment system, comprising:
the adsorption treatment device (100) according to claim 6 or 7; and
a pretreatment device that treats a treatment target fluid before introduction into the adsorption treatment device, and/or an aftertreatment device that treats a desorption gas discharged from the adsorption treatment device.

## Patentansprüche

1. Hohlzylindrischer Adsorptionsrotor (90), der sich um eine Zylinderachse (C) dreht, wobei der Adsorptionsrotor (90) aufweist:
eine Mehrzahl von Adsorptionselementblöcken (140), die mit Adsorptionselementen (142) beladen sind, durch die Gas hindurchströmen kann; und
eine Mehrzahl von Trennwandteilen (60), durch die kein Gas hindurchströmen kann,
wobei die Adsorptionselementblöcke (140) und die Trennwandteile (60) alternierend in einer Umfangsrichtung um die Zylinderachse herum angeordnet sind, und
jeder der Adsorptionselementblöcke (140) aufweist:
ein Gehäuse (141) mit einer Einlassöffnung (141a) und einer Auslassöffnung (141b); und
ein im Gehäuse (141) aufgenommenes Adsorptionselement (142), wobei das Adsorptionselement (142) von Gas durchströmt werden kann,
wobei das Gehäuse (141) ermöglicht, dass das gesamte über die Einlassöffnung (141a) eingeleitete Gas das Adsorptionselement (142) durchströmen und anschließend über die Auslassöffnung (141b) abgegeben werden kann,
wobei das Adsorptionselement (142) ein Aktivkohlefaservlies (132a) aufweist, und
das Aktivkohlefaservlies, gemessen gemäß der Beschreibung, ein Gesamtgewicht pro Flächeneinheit von 600 bis 6.000 g/m², eine Toluol-Adsorptionsrate von 25 bis 75 Gew.-% und einen Faserdurchmesser von 15 bis 120 µm aufweist.

2. Hohlzylindrischer Adsorptionsrotor (90) nach Anspruch 1, wobei das Adsorptionselement (142) dazu eingerichtet ist, zu ermöglichen, dass das Gas in einer das Adsorptionselement durchkreuzenden Weise strömen kann.

3. Hohlzylindrischer Adsorptionsrotor (90) nach Anspruch 1, wobei das Aktivkohlefaservlies, gemessen gemäß der Beschreibung, eine Rohdichte von 50 bis 200 kg/m³, eine Kompressibilität von 30% oder weniger und einen Druckelastizitätsmodul von 80% oder mehr aufweist.

4. Hohlzylindrischer Adsorptionsrotor (90) nach Anspruch 1, wobei eine Mehrzahl der Adsorptionselemente (142) dazu eingerichtet sind, im Gehäuse (141) stapelförmig angeordnet zu werden.

5. Hohlzylindrischer Adsorptionsrotor (90) nach Anspruch 1, wobei das einzelne Adsorptionselement (142) gefaltet und dazu eingerichtet ist, im Gehäuse (141) stapelförmig angeordnet zu werden.

6. Adsorptionsbehandlungsvorrichtung (100), mit;
dem Adsorptionsrotor (90) nach einem der Ansprüche 1 bis 5; und
einem Strömungswegerzeugungselement (2, 4, 5), das einen Strömungsweg für das Gas erzeugt, so dass es durch die für den Adsorptionsrotor (90) vorgesehenen Adsorptionselementblöcke (140) strömt.

7. Adsorptionsbehandlungsvorrichtung (100) nach Anspruch 6, wobei das Strömungswegerzeugungselement (2, 4, 5) den Strömungsweg für das Gas so erzeugt, dass ein Heizgas in der radialen Richtung um die Zylinderachse durch die Adsorptionselementblöcke (140) strömen kann, die bei festgelegten Drehphasen der Drehbewegung des Adsorptionsrotors (90) positioniert sind, wobei das Heizgas zum Desorbieren eines organischen Lösungsmittels aus einem Behandlungszielgas, das das organische Lösungsmittel enthält, oder dem Adsorptionselement dient.

8. Behandlungssystem, mit:
der Adsorptionsbehandlungsvorrichtung (100) nach Anspruch 6 oder 7; und
einer Vorbehandlungsvorrichtung, die ein Behandlungszielfluid vor dem Einleiten in die Adsorptionsbehandlungsvorrichtung behandelt, und/oder einer Nachbehandlungsvorrichtung, die ein aus der Adsorptionsbehandlungsvorrichtung abgegebenes Desorptionsgas behandelt.

## Revendications

1. Rotor d'adsorption cylindrique creux (90) tournant autour d'un axe de cylindre (C), le rotor d'adsorption (90) comprenant:
une pluralité de blocs d'éléments d'adsorption (140) chargés d'éléments d'adsorption (142) à travers lesquels un gaz peut passer; et
une pluralité de parties de séparation (60) à travers lesquelles aucun gaz ne peut passer,
dans lequel les blocs d'éléments d'adsorption (140) et les parties de séparation (60) sont disposés en alternance dans une direction circonférentielle autour de l'axe de cylindre, et
chacun des blocs d'éléments d'adsorption (140) comprend
un boîtier (141) qui a une ouverture d'introduction (141a) et une ouverture d'évacuation (141b); et un élément d'adsorption (142) qui est chargé dans le boîtier (141), et qui permet au gaz de passer à travers cet élément d'adsorption (142),
dans lequel le boîtier (141) permet à tout le gaz introduit depuis l'ouverture d'introduction (141a) de passer à travers l'élément d'adsorption (142) et d'être ensuite évacué par l'ouverture d'évacuation (141b),
l'élément d'adsorption (142) inclut un tissu non tissé de fibres de carbone activé (132a), et
mesuré conformément à la description, le tissu non tissé de fibres de carbone activé a un poids total par unité de surface de 600 à 6 000 g/m², un taux d'adsorption de toluène de 25 à 75 % en poids et un diamètre de fibre de 15 à 120 µm.

2. Rotor d'adsorption cylindrique creux (90) selon la revendication 1, dans lequel l'élément d'adsorption (142) est disposé de manière à permettre au gaz de s'écouler de manière croisée.

3. Rotor d'adsorption cylindrique creux (90) selon la revendication 1, dans lequel, mesuré conformément à la description, le tissu non tissé de fibres de carbone activé a une masse volumique apparente de 50 à 200 kg/m³, une compressibilité de 30 % ou moins et un module d'élasticité en compression de 80 % ou plus.

4. Rotor d'adsorption cylindrique creux (90) selon la revendication 1, dans lequel une pluralité des éléments d'adsorption (142) sont disposés pour être empilés dans le boîtier (141).

5. Rotor d'adsorption cylindrique creux (90) selon la revendication 1, dans lequel l'élément d'adsorption unique (142) est plié et est disposé pour être empilé dans le boîtier (141).

6. Dispositif de traitement par adsorption (100), comprenant:
le rotor d'adsorption (90) selon l'une quelconque des revendications 1 à 5; et
un élément de formation de trajet d'écoulement (2, 4, 5) qui forme un trajet d'écoulement pour que le gaz s'écoule à travers les blocs d'éléments d'adsorption (140) prévus pour le rotor d'adsorption (90).

7. Dispositif de traitement par adsorption (100) selon la revendication 6, dans lequel l'élément de formation de trajet d'écoulement (2, 4, 5) forme le trajet d'écoulement pour le gaz de manière à permettre à un gaz de chauffage de passer dans une direction radiale autour de l'axe de cylindre à travers les blocs d'éléments d'adsorption (140) positionnés à des phases de rotation fixées dans la rotation du rotor d'adsorption (90), le gaz de chauffage étant pour désorber un solvant organique d'un gaz cible de traitement contenant le solvant organique ou de l'élément d'adsorption.

8. Système de traitement, comprenant:
le dispositif de traitement par adsorption (100) selon la revendication 6 ou 7; et
un dispositif de prétraitement qui traite un fluide cible de traitement avant l'introduction dans le dispositif de traitement par adsorption, et/ou un dispositif de post-traitement qui traite un gaz de désorption évacué du dispositif de traitement par adsorption.
